(19) Europäisches Patentamt
European Patent Office
Office européen des brevets

(11) EP 3 127 931 A1

(12) EUROPEAN PATENT APPLICATION
published in accordance with Art. 153(4) EPC

(43) Date of publication:
**08.02.2017 Bulletin 2017/06**

(21) Application number: **15772226.5**

(22) Date of filing: **30.03.2015**

(51) Int Cl.:
***C08G 18/67*** *(2006.01)* ***C08F 290/06*** *(2006.01)*
***C08F 299/06*** *(2006.01)* ***C08G 18/73*** *(2006.01)*
***C09D 175/14*** *(2006.01)*

(86) International application number:
**PCT/JP2015/059837**

(87) International publication number:
**WO 2015/152110 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.03.2014 JP 2014071968**
**26.12.2014 JP 2014263751**
**26.12.2014 JP 2014263752**
**26.12.2014 JP 2014263753**

(71) Applicant: **The Nippon Synthetic Chemical Industry Co., Ltd.**
**Osaka-shi, Osaka 530-0018 (JP)**

(72) Inventors:
- **NODA Toshiro**
  **Osaka-shi**
  **Osaka 530-0018 (JP)**
- **KANDA Kousou**
  **Osaka-shi**
  **Osaka 530-0018 (JP)**
- **TSUJIMOTO Atsushi**
  **Osaka-shi**
  **Osaka 530-0018 (JP)**

(74) Representative: **Kuhnen & Wacker**
**Patent- und Rechtsanwaltsbüro**
**Prinz-Ludwig-Straße 40A**
**85354 Freising (DE)**

# (54) URETHANE (METH)ACRYLATE COMPOUND, ACTIVE-ENERGY-RAY-CURABLE RESIN COMPOSITION, AND COATING AGENT

(57) The embodiments of the present invention provide a urethane (meth) acrylate compound (A) prepared by a reaction of a hydroxyl group-containing (meth)acrylate compound (x) having a structural moiety derived from ε-caprolactone with a polyvalent isocyanate compound (y), wherein the polyvalent isocyanate compound (y) has an average isocyanate group number of not less than 3.2. A cured coating film formed from an active energy radiation-curable resin composition containing the urethane (meth)acrylate compound has practically acceptable resilience, and is excellent in blocking resistance and surface hardness and further excellent in transparency and metal base adhesiveness.

EP 3 127 931 A1

## Description

TECHNICAL FIELD

The embodiments of the present invention relate to a urethane (meth) acrylate compound, an active energy radiation-curable resin composition, and a coating agent. More specifically, the invention relates to an active energy radiation-curable resin composition for formation of a cured coating film excellent in scratch resilience, blocking resistance, surface hardness, transparency and adhesiveness to a metal base, and to a coating agent prepared by using the resin composition.

BACKGROUND ART

Conventionally, active energy radiation-curable resin compositions, which are completely curable in a short period of time by irradiation with an active energy radiation such as radioactive radiation, are widely used for coating agents, adhesive agents and anchor coating agents to be applied onto various bases.

Particularly, it is desirable to develop an active energy radiation-curable resin composition, as a coating agent, capable of forming a cured coating film having scratch resilience on a surface of a plastic base for protection of the outermost surface of the base. For example, an ultraviolet radiation-curable coating composition (see, for example, PTL 1) is proposed, which employs urethane acrylate oligomers obtained by a reaction of a polycaprolactone-containing polyfunctional alcohol, an isocyanate and a hydroxyl group-containing (meth)acrylate.

RELATED ART DOCUMENT

PATENT DOCUMENT

PTL 1: JP-A-2004-35599

SUMMARY OF INVENTION

In the art disclosed in PTL 1, however, the cured coating film has certain resilience which is attributable to the polycaprolactone-containing polyfunctional alcohol used as an ingredient for the urethane (meth)acrylate compound. The urethane (meth)acrylate compound is prepared by a reaction of a polyvalent isocyanate compound, a hydroxyl group-containing acrylate and a polyol. With the need for the reaction of these three ingredients, it is difficult to control the reaction. Therefore, the urethane (meth)acrylate compound is liable to have a higher molecular weight and hence a higher viscosity, or to suffer from gelation.

Further, a curable composition containing the urethane (meth)acrylate compound having a higher molecular weight causes a problem such that a cured coating film formed from the curable composition is liable to be tacky (have tackiness) and hence poorer in blocking resistance.

In view of the foregoing, it is an object of the embodiments of the present invention to provide a urethane (meth)acrylate compound capable of forming a cured coating film which has practically acceptable resilience and is excellent in blocking resistance and transparency, to provide an active energy radiation-curable resin composition containing the urethane (meth)acrylate compound and a coating agent employing the active energy radiation-curable resin composition.

In view of the foregoing, the inventors of the embodiments of the present invention conducted intensive studies and, as a result, found that, if a urethane (meth)acrylate compound is prepared by a reaction of a hydroxyl group-containing (meth)acrylate compound having a structural moiety derived from ε-caprolactone with a polyvalent isocyanate compound, and the polyvalent isocyanate compound to be used as the ingredient has a greater average number of functional groups than an ordinary polyvalent isocyanate compound, the urethane (meth)acrylate compound has a greater number of branches introduced into the molecular structure thereof, and has a lower molecular weight than a urethane (meth)acrylate compound having branches introduced by using a polyfunctional alcohol and, therefore, is capable of forming a cured coating film excellent in scratch resilience and blocking resistance with good balance. Thus, the inventors attained the embodiments of the present invention.

According to an inventive aspect, there is provided a urethane (meth)acrylate compound (A) prepared by a reaction of a hydroxyl group-containing (meth)acrylate compound (x) having a structural moiety derived from ε-caprolactone with a polyvalent isocyanate compound (y), wherein the polyvalent isocyanate compound (y) has an average isocyanate group number of not less than 3.2.

The embodiments of the present invention also provides an active energy radiation-curable resin composition containing the urethane (meth)acrylate compound, and provides a coating agent.

In the embodiments of the present invention, the active energy radiation-curable resin composition preferably further contains a urethane (meth)acrylate compound (B) different from the urethane (meth) acrylate compound (A) for improvement of surface hardness, a polysiloxane structure-containing compound (C) for improvement of blocking resistance, and/or a phosphate group-containing ethylenically unsaturated compound (D) for improvement of metal base adhesiveness.

An active energy radiation-curable resin composition capable of forming a cured coating film excellent in scratch resilience and blocking resistance with good balance can be prepared by using the inventive urethane (meth)acrylate compound. Particularly, the active energy radiation-curable resin composition is useful as a coating agent.

DESCRIPTION OF EMBODIMENTS

The embodiments of the present invention will hereinafter be described in detail.

In the embodiments of the present invention, "(meth)acryl" means acryl or methacryl, and "(meth)acryloyl" means acryloyl or methacryloyl. Further, "(meth)acrylate" means acrylate or methacrylate.

<Urethane (meth)acrylate compound (A)>

A urethane (meth)acrylate compound (A) of the embodiments of the present invention is prepared by a reaction of a hydroxyl group-containing (meth)acrylate compound (x) having a structural moiety derived from ε-caprolactone with a polyvalent isocyanate compound (y) having an average isocyanate group number of not less than 3.2.

The hydroxyl group-containing (meth)acrylate compound (x) having the structural moiety derived from ε-caprolactone (hereinafter sometimes referred to simply as "hydroxyl group-containing (meth)acrylate compound (x)") is preferably a compound obtained by ring-opening polymerization of a hydroxyl group-containing (meth)acrylate compound with ε-caprolactone. An example of the hydroxyl group-containing (meth)acrylate compound (x) is a compound represented by the following general formula (1):

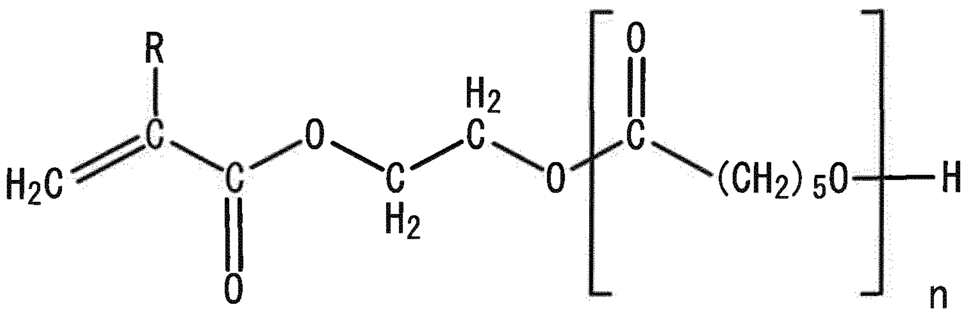

・・・(1)

wherein R is a hydrogen atom or a methyl group, and n is an integer of 1 to 25.

In the above general formula (1), n is 1 to 25, preferably 1 to 15, particularly preferably 1 to 10, further preferably 2 to 5.

If n is excessively great, the blocking resistance tends to be reduced.

Specific examples of the compound represented by the above general formula (1) include a caprolactone adduct of 2-hydroxyethyl acrylate and a caprolactone adduct of 2-hydroxyethyl methacrylate, and exemplary products thereof are commercially available under the trade names of PLACCEL FA1, PLACCEL FA1DDM, PLACCEL FA2D, PLACCEL FA5, PLACCEL FA10L, PLACCEL FM1, PLACCEL FM1D, PLACCEL FM2D, PLACCEL FM3, PLACCEL FM4 and PLACCEL FM5 from Daicel Co., Ltd.

Among these, a 1-mol caprolactone adduct of 2-hydroxyethyl acrylate, a 2-mol caprolactone adduct of 2-hydroxyethyl acrylate and a 5-mol caprolactone adduct of 2-hydroxyethyl acrylate are preferred because of good balance between the resilience and the blocking resistance. The 2-mol caprolactone adduct of 2-hydroxyethyl acrylate is particularly preferred.

The number of ethylenically unsaturated groups of the hydroxyl group-containing (meth)acrylate compound (x) having the structural moiety derived from ε-caprolactone is preferably 1 to 5, particularly preferably 1 to 3, further preferably 1.

If the ethylenically unsaturated group number is excessively great, it will be difficult to ensure the resilience.

The hydroxyl group-containing (meth)acrylate compound (x) having the structural moiety derived from ε-caprolactone preferably has a weight average molecular weight of 100 to 2,500, particularly preferably 200 to 1,000, further preferably 300 to 500.

If the weight average molecular weight is excessively high, the blocking resistance tends to be reduced. If the weight average molecular weight is excessively low, it will be difficult to ensure the resilience.

The polyvalent isocyanate compound (y) to be used in the embodiments of the present invention is required to have an average isocyanate group number of not less than 3.2 as calculated from the following expression (1):

$$\text{Average isocyanate group number} = \frac{\text{Number average molecular weight (Mn)} \times \text{Isocyanate group concentration (wt\%)}}{42.02 \times 100} \quad \ldots (1)$$

The isocyanate group concentration (wt%) in the expression is measured by a method specified in JIS K1603-1:2007.

The number average molecular weight (Mn) in the expression is a number average molecular weight determined on the bases of the polystyrene molecular weight calibration standard with the use of a high-speed liquid chromatography (available from Nihon Waters K. K. and incorporating Waters 2695 (main body) and Waters 2414 (detector)) and three columns (Shodex GPC KF-806L having a removal limit molecular weight of $2 \times 10^7$, a separation range of 100 to $2 \times 10^7$ and a theoretical stage number of 10,000 per column, and filled with a filler of a styrene-divinylbenzene copolymer having a particle diameter of 10 μm) connected in series to the liquid chromatography.

The average isocyanate group number of the polyvalent isocyanate compound (y) is required to be not less than 3.2, preferably not less than 3.5, particularly preferably not less than 3.8, further preferably not less than 4, especially preferably not less than 4.5. The upper limit of the average isocyanate group number is typically 10, preferably 6.

If the average isocyanate group number of the polyvalent isocyanate compound (y) is excessively small, the resilience is liable to be poorer.

The average isocyanate group number of the polyvalent isocyanate compound (y) may be controlled, for example, by oligomerizing a diisocyanate compound having two isocyanate groups to provide isocyanate compounds having different isocyanate group numbers in an isocyanate group number distribution.

Examples of the polyvalent isocyanate compound (y) include polyvalent isocyanate compounds prepared as having an allophanate structure, a cyanurate structure or a biuret structure by oligomerizing any of the following diisocyanates: aromatic diisocyanates such as tolylene diisocyanate, diphenylmethane diisocyanate, polyphenylmethane diisocyanates, modified diphenylmethane diisocyanates, xylylene diisocyanate, tetramethylxylylene diisocyanate, phenylene diisocyanate and naphthalene diisocyanate; acyclic aliphatic diisocyanates such as hexamethylene diisocyanate, trimethylhexamethylene diisocyanate, lysine diisocyanate and lysine triisocyanate; and alicyclic diisocyanates such as hydrogenated diphenylmethane diisocyanates, hydrogenated xylylene diisocyanates, isophorone diisocyanate, norbornene diisocyanate, 1,3-bis(isocyanatomethyl)cyclohexane and 1,4-bis(isocyanatomethyl)cyclohexane.

Among these, the polyvalent isocyanate compound (y) is preferably a polyvalent isocyanate compound prepared by using the acyclic aliphatic diisocyanate, particularly preferably a polyvalent isocyanate compound prepared by using hexamethylene diisocyanate, further preferably a biuret type oligomer or a cyanurate type oligomer of hexamethylene diisocyanate, especially preferably a biuret type oligomer of hexamethylene diisocyanate.

The polyvalent isocyanate compound (y) preferably has a number average molecular weight of 500 to 5,000, particularly preferably 600 to 2,000, further preferably 700 to 1,000. If the number average molecular weight is excessively high, it will be difficult to ensure the resilience. If the number average molecular weight is excessively low, it will be difficult to oligomerize the isocyanate compound.

The urethane (meth) acrylate compound (A) of the embodiments of the present invention is produced by the reaction of the hydroxyl group-containing (meth)acrylate compound (x) with the polyvalent isocyanate compound (y). The production of the urethane (meth)acrylate compound (A) may be achieved by a generally known urethane (meth)acrylate compound production method. For example, the hydroxyl group-containing (meth)acrylate compound (x) and the polyvalent isocyanate compound (y) may be simultaneously or separately fed into a reactor, and allowed to react with each other.

Where the hydroxyl group-containing (meth) acrylate compound (x) has one hydroxyl group and the polyvalent isocyanate compound (y) has an average isocyanate group number of 3.5, for example, the reaction molar ratio between the hydroxyl group-containing (meth)acrylate compound (x) and the polyvalent isocyanate compound (y) is approximately (x) : (y) = 3.5:1. Where the hydroxyl group-containing (meth)acrylate compound (x) has one hydroxyl group and the polyvalent isocyanate compound (y) has an average isocyanate group number of 4.5, the reaction molar ratio between the hydroxyl group-containing (meth)acrylate compound (x) and the polyvalent isocyanate compound (y) is approximately

(x) : (y) = 4.5:1.

The addition reaction of the hydroxyl group-containing (meth)acrylate compound (x) with the polyvalent isocyanate compound (y) is terminated when the percentage of isocyanate groups remaining in the reaction system is reduced to 0.5 wt% or less. Thus, the urethane (meth)acrylate compound (A) is produced.

In the reaction of the hydroxyl group-containing (meth)acrylate compound (x) with the polyvalent isocyanate compound (y), a catalyst is preferably used for accelerating the reaction. Examples of the catalyst include: organometal compounds such as dibutyltin dilaurate, dibutyltin diacetate, trimethyltin hydroxide, tetra-n-butyltin, zinc bis(acetylacetonate), zinc bis(tetrafluoroacetylacetonate), zirconium monoacetylacetonate, zirconium ethylacetoacetate, zirconium tris(acetylacetonate) ethylacetoacetate, zirconium tetraacetylacetonate, tetramethoxytitanium, tetraethoxytitanium, tetraisopropoxytitanium and tetrabutoxytitanium; metal salts such as tin octenoate, zinc hexanoate, zinc octenoate, zinc stearate, zirconium 2-ethylhexanoate, cobalt naphthenate, stannous chloride, stannic chloride and potassium acetate; amine catalysts such as triethylamine, triethylenediamine, benzyldiethylamine, 1,4-diazabicyclo[2,2,2]octane, 1,8-diazabicyclo[5,4,0]undecene, N,N,N',N'-tetramethyl-1,3-butanediamine, N-methylmorpholine and N-ethylmorpholine; and bismuth catalysts including bismuth nitrate, bismuth bromide, bismuth iodide, bismuth sulfide, organic bismuth compounds such as dibutyl bismuth dilaurate and dioctyl bismuth dilaurate, and organic bismuth salts such as bismuth 2-ethylhexanoate, bismuth naphthenate, bismuth isodecanoate, bismuth neodecanoate, bismuth laurate, bismuth maleate, bismuth stearate, bismuth oleate, bismuth linoleate, bismuth acetate, bismuth bisneodecanoate, bismuth disalicylate and bismuth digallate, among which dibutyltin dilaurate and 1,8-diazabicyclo[5,4,0]undecene are preferred. These may be used alone or in combination.

In the reaction of the hydroxyl group-containing (meth)acrylate compound (x) with the polyvalent isocyanate compound (y), an organic solvent having no functional group reactive with the isocyanate groups may be used. Examples of the organic solvent include: esters such as methyl acetate, ethyl acetate, butyl acetate, 2-ethoxyethyl acetate and 2-methoxy-1-methy ethyl acetate; ketones such as methyl ethyl ketone and methyl isobutyl ketone; and aromatic solvents such as toluene and xylene.

The reaction temperature is typically 30°C to 100°C, preferably 40°C to 90°C, and the reaction period is typically 2 to 10 hours, preferably 3 to 8 hours.

The number of ethylenically unsaturated groups to be contained in the urethane (meth) acrylate compound (A) produced in the aforementioned manner is preferably 1 to 10, particularly preferably 3 to 8, further preferably 4 to 6. If the number of the ethylenically unsaturated groups is excessively small, the resulting coating film tends to have a lower hardness. If the number of the ethylenically unsaturated groups is excessively great, the coating film tends to have an excessively high hardness, failing to have resilience.

The urethane (meth)acrylate compound (A) preferably has an ethylenically unsaturated group content (mmol/g) of 0.1 to 10 mmol/g, particularly preferably 1 to 5 mmol/g, further preferably 1 to 3 mmol/g. If the ethylenically unsaturated group content (mmol/g) of the urethane (meth)acrylate compound (A) is excessively low, the urethane (meth)acrylate compound (A) tends to have poorer film formability after the irradiation with active energy radiation. If the ethylenically unsaturated group content (mmol/g) is excessively high, the resulting coating film tends to have a higher hardness and hence poorer resilience.

The urethane (meth)acrylate compound (A) preferably has a weight average molecular weight of 1,000 to 50,000, particularly preferably 2,000 to 10,000, further preferably 3,000 to 5,000. If the weight average molecular weight is excessively low, it will be difficult to ensure sufficient resilience. If the weight average molecular weight is excessively high, the resulting coating agent tends to have a higher viscosity, making a painting operation difficult.

The weight average molecular weight (Mw) is a weight average molecular weight determined based on polystyrene molecular weight calibration standard with the use of a high-speed liquid chromatography (available from Nihon Waters K.K. and incorporating Waters 2695 (main body) and Waters 2414 (detector)) and three columns (Shodex GPC KF-806L having a removal limit molecular weight of $2 \times 10^7$, a separation range of 100 to $2 \times 10^7$ and a theoretical stage number of 10,000 per column, and filled with a filler of a styrene-divinylbenzene copolymer having a particle diameter of 10 $\mu$m) connected in series to the liquid chromatography.

The urethane (meth)acrylate compound (A) preferably has a viscosity of 100 to 10,000 mPa·s, particularly preferably 300 to 8,000 mPa·s, further preferably 500 to 5, 000 mPa·s, at 60°C. If the viscosity falls outside the aforementioned range, the coatability tends to be reduced.

The viscosity is measured by means of an E-type viscometer.

Thus, the urethane (meth)acrylate compound (A) of the embodiments of the present invention can be produced. An active energy radiation-curable resin composition can be prepared by using the urethane (meth)acrylate compound (A).

<Active energy radiation-curable resin composition>

The active energy radiation-curable resin composition of the embodiments of the present invention contains

the urethane (meth)acrylate compound (A).

In the embodiments of the present invention, the active energy radiation-curable resin composition preferably further contains another urethane (meth)acrylate compound (B) (different from the urethane (meth)acrylate compound (A)) for improvement of the surface hardness.

In the embodiments of the present invention, the active energy radiation-curable resin composition preferably contains, in addition to the urethane (meth)acrylate compound (A) and the urethane (meth)acrylate compound (B), a polysiloxane structure-containing compound (C) for improvement of blocking resistance and/or a phosphate group-containing ethylenically unsaturated compound (D) for improvement of adhesiveness to a metal base.

<Urethane (meth)acrylate compound (B)>

The urethane (meth) acrylate compound (B) to be used in the embodiments of the present invention is required to be different from the urethane (meth) acrylate compound (A), but is preferably at least one of a urethane (meth) acrylate compound (B1) prepared by a reaction of a hydroxyl group-containing (meth)acrylate compound (b1), a polyvalent isocyanate compound (b2) and a polyol compound (b3), and a urethane (meth) acrylate compound (B2) prepared by a reaction of the hydroxyl group-containing (meth)acrylate compound (b1) and the polyvalent isocyanate compound (b2).

Particularly, the urethane (meth)acrylate compound (B1) prepared by the reaction of the hydroxyl group-containing (meth)acrylate compound (b1), the polyvalent isocyanate compound (b2) and the polyol compound (b3) is preferred which is capable of ensuring proper resilience.

Examples of the hydroxyl group-containing (meth)acrylate compound (b1) include hydroxyalkyl (meth)acrylates such as 2-hydroxyethyl (meth)acrylate, 2-hydroxypropyl (meth)acrylate, 2-hydroxybutyl (meth)acrylate, 4-hydroxybutyl (meth)acrylate and 6-hydroxyhexyl (meth)acrylate, 2-hydroxyethylacryloyl phosphate, 2-(meth)acryloyloxyethyl-2-hydroxypropyl phthalate, caprolactone-modified 2-hydroxyethyl (meth)acrylates, dipropylene glycol (meth)acrylate, fatty acid-modified glycidyl (meth) acrylates, polyethylene glycol mono(meth)acrylates, polypropylene glycol mono(meth)acrylates, 2-hydroxy-3-(meth)acryloyloxypropyl (meth)acrylate, glycerol di(meth)acrylate, 2-hydroxy-3-acryloyloxypropyl methacrylate, pentaerythritol tri(meth)acrylate, caprolactone-modified pentaerythritol tri (meth) acrylates, ethylene oxide-modified pentaerythritol tri(meth)acrylates, dipentaerythritol penta(meth)acrylate, caprolactone-modified dipentaerythritol penta(meth)acrylates, ethylene oxide-modified dipentaerythritol penta(meth)acrylates.

Among these, hydroxyl group-containing (meth)acrylate compounds having one to three ethylenically unsaturated groups are preferred for proper resilience. Hydroxyalkyl (meth)acrylates such as 2-hydroxyethyl (meth)acrylate, 2-hydroxypropyl (meth)acrylate, 4-hydroxybutyl (meth)acrylate, 6-hydroxyhexyl (meth)acrylate and caprolactone-modified 2-hydroxyethyl (meth)acrylates as the compound having one ethylenically unsaturated group, glycerol di(meth)acrylate as the compound having two ethylenically unsaturated groups, and pentaerythritol tri(meth)acrylate as the compound having three ethylenically unsaturated groups are preferred for excellent reactivity and versatility. Among these, the compound having one ethylenically unsaturated group is preferred for suppression of curing contraction of a cured product. Particularly, 2-hydroxyethyl (meth)acrylate and 2-hydroxypropyl (meth)acrylate are preferred. It is also preferred to use a polyfunctional (meth)acrylate for further improvement of the surface hardness.

These hydroxyl group-containing (meth)acrylate compounds (b1) may be used alone or in combination.

Examples of the polyvalent isocyanate compound (b2) include: aromatic polyisocyanates such as tolylene diisocyanate, diphenylmethane diisocyanate, polyphenylmethane polyisocyanates, modified diphenylmethane diisocyanates, xylylene diisocyanate, tetramethylxylylene diisocyanate, phenylene diisocyanate and naphthalene diisocyanate; aliphatic polyisocyanates such as pentamethylene diisocyanate, hexamethylene diisocyanate, trimethylhexamethylene diisocyanate, lysine diisocyanate and lysine triisocyanate; alicyclic polyisocyanates such as hydrogenated diphenylmethane diisocyanates, isophorone diisocyanate, norbornene diisocyanate, 1,3-bis(isocyanatomethyl)cyclohexane, 1,4-bis(isocyanatomethyl)cyclohexane; trimers and oligomers of these polyisocyanates; and allophanate type polyisocyanates, biuret type polyisocyanates and water dispersed type polyisocyanates.

Among these, diisocyanate compounds are preferred for proper resilience. Particularly, aliphatic diisocyanates such as pentamethylene diisocyanate, hexamethylene diisocyanate, trimethylhexamethylene diisocyanate and lysine diisocyanate, and alicyclic diisocyanates such as hydrogenated diphenylmethane diisocyanates, isophorone diisocyanate, norbornene diisocyanate, 1,3-bis(isocyanatomethyl)cyclohexane and 1,4-bis(isocyanatomethyl)cyclohexane are preferably used. Further preferably, isophorone diisocyanate, hydrogenated diphenylmethane diisocyanates, 1,3-bis(isocyanatomethyl)cyclohexane and norbornene diisocyanate are used for suppression of the curing contraction. Especially preferably, hydrogenated diphenylmethane diisocyanates, 1,3-bis(isocyanatomethyl)cyclohexane and isophorone diisocyanate are used for excellent reactivity and versatility.

The polyvalent isocyanate compounds (b2) may be used alone or in combination.

Examples of the polyol compound (b3) include a polyether polyol, a polyester polyol, a polycarbonate polyol, a polyolefin polyol, a polybutadiene polyol, a (meth)acrylic polyol and a polysiloxane polyol.

Examples of the polyether polyol include alkylene structure-containing polyether polyols such as polyethylene glycols, polypropylene glycols, polytetramethylene glycols, polybutylene glycols and polyhexamethylene glycols, and random or block copolymers of these polyalkylene glycols.

Examples of the polyester polyol include condensation polymerization products of a polyvalent alcohol and a polyvalent carboxylic acid, ring-opening polymerization products of cyclic esters (lactones), reaction products of a polyvalent alcohol, a polyvalent carboxylic acid and a cyclic ester.

Examples of the polyvalent alcohol include ethylene glycol, diethylene glycol, propylene glycol, dipropylene glycol, trimethylene glycol, 1,4-tetramethylene diol, 1,3-tetramethylene diol, 2-methyl-1,3-trimethylene diol, 1,5-pentamethylene diol, neopentyl glycol, 1,6-hexamethylene diol, 3-methyl-1,5-pentamethylene diol, 2,4-diethyl-1,5-pentamethylene diol, glycerol, trimethylol propane, trimethylol ethane, cyclohexane diols (such as 1,4-cyclohexane diol), bisphenols (such as bisphenol-A), sugar alcohols (such as xylitol and sorbitol).

Examples of the polyvalent carboxylic acid include: aliphatic dicarboxylic acids such as malonic acid, maleic acid, fumaric acid, succinic acid, glutaric acid, adipic acid, suberic acid, azelaic acid, sebacic acid and dodecanedioic acid; alicyclic dicarboxylic acids such as 1,4-cyclohexane dicarboxylic acid; and aromatic dicarboxylic acids such as terephthalic acid, isophthalic acid, o-phthalic acid, 2,6-naphthalene dicarboxylic acid, p-phenylene dicarboxylic acid and trimellitic acid.

Examples of the cyclic ester include propiolactone, β-methyl-δ-valerolactone and ε-caprolactone.

Examples of the polycarbonate polyol include reaction products of a polyvalent alcohol and phosgene, and ring-opening polymerization products of cyclic carbonates (such as alkylene carbonates).

Examples of the polyvalent alcohol include those described for the polyester polyols. Examples of the alkylene carbonate include ethylene carbonate, trimethylene carbonate, tetramethylene carbonate and hexamethylene carbonate.

The polycarbonate polyol may be a compound having carbonate bonds in the molecule thereof and hydroxyl groups at terminals of the molecule thereof, and further having ester bonds together with the carbonate bonds.

An example of the polyolefin polyol is a compound having a saturated hydrocarbon skeleton such as of a homopolymer or a copolymer of ethylene, propylene and/or butene and having hydroxyl groups at terminals of the molecule thereof.

An example of the polybutadiene polyol is a compound having a hydrocarbon skeleton such as of a copolymer of butadiene and hydroxyl groups at terminals of the molecule thereof.

The polybutadiene polyol may be a hydrogenated polybutadiene polyol with some or all of ethylenically unsaturated groups thereof hydrogenated in its structure.

The (meth)acrylic polyol is a polymer or a copolymer of a (meth)acrylate having at least two hydroxyl groups in the molecule thereof. Examples of the (meth)acrylate include alkyl (meth)acrylates such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, decyl (meth)acrylate, dodecyl (meth)acrylate and octadecyl (meth)acrylate.

Examples of the polysiloxane polyol include dimethyl polysiloxane polyol and methylphenyl polysiloxane polyol.

Among these, the polyester polyol and the polyether polyol are preferred for easy balance between the resilience and the surface hardness of the coating film.

In the embodiments of the present invention, the polyol compound (b3) preferably has a number average molecular weight of 50 to 8,000, particularly preferably 100 to 5, 000, further preferably 200 to 3, 000. If the number average molecular weight is excessively low, the resulting coating film tends to have poorer resilience. If the number average molecular weight is excessively high, the resulting coating film tends to have a lower surface hardness.

The number average molecular weight is a number average molecular weight determined based on polystyrene molecular weight calibration standard with the use of a high-speed liquid chromatography (available from Nihon Waters K.K. and incorporating Waters 2695 (main body) and Waters 2414 (detector)) and three columns (Shodex GPC KF-806L having a removal limit molecular weight of $2 \times 10^7$, a separation range of 100 to $2 \times 10^7$ and a theoretical stage number of 10,000 per column, and filled with a filler of a styrene-divinylbenzene copolymer having a particle diameter of 10 μm) connected in series to the liquid chromatography.

In the embodiments of the present invention, the urethane (meth)acrylate compound (B1) is produced in the following manner.

Exemplary production methods include: (1) a method in which the hydroxyl group-containing (meth)acrylate compound (b1), the polyvalent isocyanate compound (b2) and the polyol compound (b3) described above are simultaneously or separately fed into a reactor and allowed to react with each other; (2) a method in which the hydroxyl group-containing (meth)acrylate compound (b1) is allowed to react with a reaction product preliminarily obtained by a reaction of the polyol compound (b3) with the polyvalent isocyanate compound (b2); and (3) a method in which the polyol compound (b3) is allowed to react with a reaction product preliminarily obtained by a reaction of the polyvalent isocyanate compound (b2) with the hydroxyl group-containing (meth)acrylate compound (b1). For stabilization of the reactions and reduction in side products, the method (2) is preferred.

Known reaction means may be employed for the reaction of the polyol compound (b3) with the polyvalent

isocyanate compound (b2). In this case, the molar ratio between the isocyanate groups in the polyvalent isocyanate compound (b2) and the hydroxyl groups in the polyol compound (b3) is typically set to (b2) : (b3) = 2n: (2n-2) (wherein n is an integer of not less than 2), for example, whereby a terminal isocyanate group-containing compound with isocyanate groups remaining therein can be prepared. The preparation of the terminal isocyanate group-containing compound is followed by an addition reaction with the hydroxyl group-containing (meth)acrylate compound (b1).

Known reaction means may be employed for the addition reaction between the reaction product obtained by the preliminary reaction of the polyol compound (b3) with the polyvalent isocyanate compound (b2) and the hydroxyl group-containing (meth)acrylate compound (b1).

Where the reaction product has two isocyanate groups and the hydroxyl group-containing (meth)acrylate compound (b1) has one hydroxyl group, for example, the reaction molar ratio between the reaction product and the hydroxyl group-containing (meth)acrylate compound (b1) is approximately 1:2. Where the reaction product has three isocyanate groups and the hydroxyl group-containing (meth)acrylate compound (b1) has one hydroxyl group, for example, the reaction molar ratio between the reaction product and the hydroxyl group-containing (meth)acrylate compound (b1) is approximately 1:3.

The addition reaction of the reaction product with the hydroxyl group-containing (meth) acrylate compound (b1) is terminated when the percentage of the isocyanate groups remaining in the reaction system is reduced to 0.5 wt% or less. Thus, the urethane (meth)acrylate compound (B1) is produced.

In the reaction of the polyol compound (b3) with the polyvalent isocyanate compound (b2) and in the reaction of the reaction product with the hydroxyl group-containing (meth)acrylate compound (b1), a catalyst may be used for acceleration of the reactions. Examples of the catalyst include: organometal compounds such as dibutyltin dilaurate, trimethyltin hydroxide and tetra-n-butyltin; metal salts such as zinc octenoate, tin octenoate, cobalt naphthenate, stannous chloride and stannic chloride; amine catalysts such as triethylamine, benzyldiethylamine, 1,4-diazabicyclo[2,2,2]octane, 1,8-diazabicyclo[5,4,0]undecene, N,N,N',N'-tetramethyl-1,3-butanediamine and N-ethylmorpholine; bismuth catalysts including bismuth nitrate, bismuth bromide, bismuth iodide, bismuth sulfide, organic bismuth compounds such as dibutyl bismuth dilaurate and dioctyl bismuth dilaurate, and organic bismuth salts such as bismuth 2-ethylhexanoate, bismuth naphthenate, bismuth isodecanoate, bismuth neodecanoate, bismuth laurate, bismuth maleate, bismuth stearate, bismuth oleate, bismuth linoleate, bismuth acetate, bismuth bisneodecanoate, bismuth disalicylate and bismuth digallate; zirconium catalysts such as inorganic zirconium compounds, organic zirconium compounds and elemental zirconium; and combinations of two or more catalysts, e.g., zinc 2-ethylhexanoate/zirconium tetraacetylacetonate, among which dibutyltin dilaurate and 1,8-diazabicyclo[5,4,0]undecene are preferred.

In the reaction of the polyol compound (b3) with the polyvalent isocyanate compound (b2) and in the reaction of the reaction product with the hydroxyl group-containing (meth)acrylate compound (b1), an organic solvent having no functional group reactive with the isocyanate groups may be used. Examples of the organic solvent include: esters such as methyl acetate and butyl acetate; ketones such as methyl ethyl ketone and methyl isobutyl ketone; and aromatic solvents such as toluene and xylene.

The reaction temperature is typically 30°C to 90°C, preferably 40°C to 80°C, and the reaction period is typically 2 to 10 hours, preferably 3 to 8 hours.

Thus, the urethane (meth)acrylate compound (B1) is produced.

Although the urethane (meth)acrylate compound (B1) produced by the reaction of the hydroxyl group-containing (meth)acrylate compound (b1), the polyvalent isocyanate compound (b2) and the polyol compound (b3) has been described, the production of the urethane (meth)acrylate compound (B2) may be achieved by substantially the same method as described above. That is, the urethane (meth)acrylate compound (B2) may be produced by a reaction of the hydroxyl group-containing (meth)acrylate compound (b1) with the polyvalent isocyanate compound (b2) without the use of the polyol compound (b3) in the aforementioned manner.

The urethane (meth)acrylate compound (B) preferably has a weight average molecular weight of 500 to 40,000, particularly preferably 1,000 to 30,000, further preferably 1,500 to 20,000. If the weight average molecular weight is excessively low, the resulting coating film tends to have poorer resilience. If the weight average molecular weight is excessively high, the coating film tends to have a lower surface hardness.

The urethane (meth)acrylate compound (B1) preferably has a weight average molecular weight of 1,000 to 40,000, particularly preferably 1,500 to 30,000, further preferably 2,000 to 20,000. The urethane (meth)acrylate compound (B2) preferably has a weight average molecular weight of 500 to 20,000, particularly preferably 1,000 to 15,000, further preferably 1,500 to 10,000.

The weight average molecular weight is measured in the same manner as in the measurement of the weight average molecular weight of the urethane (meth) acrylate compound (A).

The urethane (meth)acrylate compound (B) preferably has a viscosity of 5,000 to 10,000 mPa·s, particularly preferably 6,000 to 90,000 mPa·s, further preferably 7,000 to 80,000 mPa·s, at 60°C. If the viscosity is excessively high, handling difficulty will result. If the viscosity is excessively low, it will be difficult to control the coating thickness.

The viscosity is measured by means of an E-type viscometer.

The proportion of the urethane (meth)acrylate compound (B) is preferably not greater than 100 parts by weight, particularly preferably 1 to 95 parts by weight, further preferably 5 to 90 parts by weight, based on 100 parts by weight of the urethane (meth)acrylate compound (A). If the proportion of the urethane (meth)acrylate compound (B) is excessively great, the resilience tends to be poorer.

<Polysiloxane structure-containing compound (C)>

In the embodiments of the present invention, generally known compounds containing a polysiloxane structure may be used as the polysiloxane structure-containing compound (C). Examples of the polysiloxane structure-containing compound (C) include: polysiloxane structure-containing (meth)acrylate monomers, a polysiloxane structure-containing urethane (meth)acrylate compound (C1), polysiloxane structure-containing poly(meth)acrylate compounds such as polysiloxane structure-containing polyether (meth) acrylate compounds, polysiloxane structure-containing polyester (meth) acrylate compounds and polysiloxane structure-containing polycarbonate (meth)acrylate compounds; polysiloxane structure-containing polyester compounds; polysiloxane structure-containing polycarbonate compounds; polysiloxane structure-containing (meth) acrylic polymers; unsaturated group-containing polysiloxane structure-containing (meth)acrylates; and compounds prepared by introducing a fluorine atom into any of the above compounds.

Among these, the polysiloxane structure-containing (meth)acrylate compounds are preferred, which are capable of forming a highly durable cured coating film having a crosslinked structure when being irradiated with ultraviolet radiation. Further, the polysiloxane structure-containing urethane (meth)acrylate compound (C1) is preferred, which is highly compatible with the urethane (meth)acrylate compound in preparation of a coating agent.

The polysiloxane structure-containing urethane (meth)acrylate compound (C1) (hereinafter sometimes referred to simply as "urethane (meth) acrylate compound (C1)") will be described.

The polysiloxane structure-containing urethane (meth)acrylate compound (C1) may be a urethane (meth)acrylate compound containing a polysiloxane structure in its molecular structure. Particularly preferred examples of the urethane (meth)acrylate compound (C1) include: a urethane (meth)acrylate compound (C1-1) prepared by using a polysiloxane compound represented by the following general formula (2) and having a hydroxyl group at one of its opposite terminals; and a urethane (meth)acrylate compound (C1-2) prepared by using a polysiloxane compound represented by the following general formula (3) and having hydroxyl groups at its opposite terminals.

The urethane (meth)acrylate compound (C1) may have both a structural moiety derived from the general formula (2) and a structural moiety derived from the general formula (3):

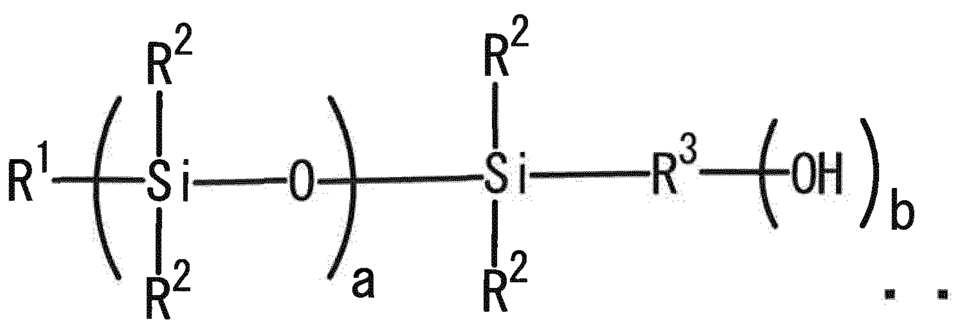

... (2)

wherein $R^1$ is an alkyl group, $R^2$s are independently an alkyl group, a cycloalkyl group or a phenyl group, $R^3$ is a hydrocarbon group or a heteroatom-containing organic group, a is an integer of not less than 1, and b is an integer of 1 to 3.

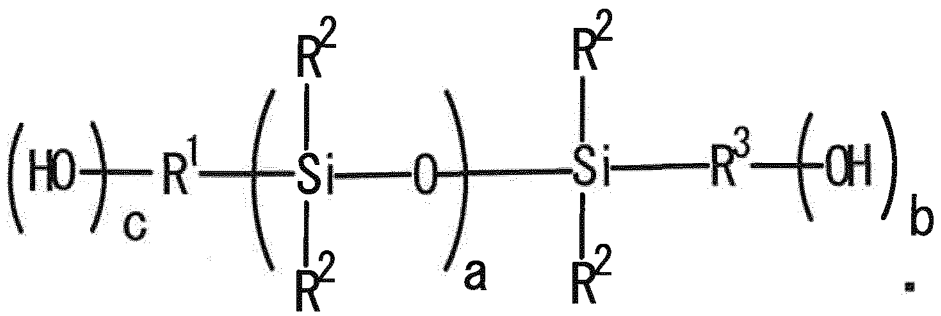

... (3)

wherein $R^1$ and $R^3$ are each a hydrocarbon group or a heteroatom-containing organic group, $R^2$s are independently an

alkyl group, a cycloalkyl group or a phenyl group, a is an integer of not less than 1, and b and c are each an integer of 1 to 3.

First, the polysiloxane structure-containing urethane (meth) acrylate compound (C1-1) to be prepared by using the polysiloxane compound represented by the general formula (2) and having a hydroxyl group at its one terminal (hereinafter sometimes referred to simply as "urethane (meth)acrylate compound (C1-1)") will be described.

The urethane (meth)acrylate compound (C1-1) is a reaction product obtained by a reaction of the polysiloxane compound (p1) represented by the general formula (2) and having a hydroxyl group at its one terminal (hereinafter sometimes referred to simply as "polysiloxane compound (p1)"), a polyisocyanate compound (p2), a hydroxyl group-containing (meth)acrylate compound (p3) and, optionally, a polyol compound (p4).

In the general formula (2) for the polysiloxane compound (p1), $R^1$ is an alkyl group having a relatively small number of carbons. More specifically, the alkyl group typically has a carbon number of 1 to 15, preferably 1 to 10, particularly preferably 1 to 5. Examples of the alkyl group include a methyl group, an ethyl group, a propyl group and a butyl group.

In the general formula (2), $R^2$s are each independently an alkyl group, a cycloalkyl group or a phenyl group.

The alkyl group preferably has a relatively small number of carbons. More specifically, the number of the carbons of the alkyl group is typically 1 to 15, preferably 1 to 10, particularly preferably 1 to 5. Examples of the alkyl group include a methyl group, an ethyl group, a propyl group and a butyl group.

The cycloalkyl group typically has a carbon number of 3 to 10, preferably 5 to 8. Examples of the cycloalkyl group include a cyclopentyl group, a cyclohexyl group and a norbornyl group.

The alkyl group, the cycloalkyl group and the phenyl group may have a substituent. Typical examples of the substituent include halogen atoms, a hydroxyl group, alkoxy groups, an amino group, a mercapto group, a sulfanyl group, a vinyl group, an acryloxy group, a methacryloxy group, aryl groups and heteroaryl groups. Where the substituent has a carbon atom, the carbon atom is excluded from the carbon number of $R^2$ specified above.

In the general formula (2), $R^3$ is a hydrocarbon group or a heteroatom-containing organic group.

The hydrocarbon group typically has a carbon number of 1 to 30, preferably 1 to 20, and may be a divalent or trivalent hydrocarbon group.

An example of the divalent hydrocarbon group is an alkylene group. The alkylene group preferably has a carbon number of 1 to 10, particularly preferably 1 to 4. Examples of the alkylene group include an ethylene group, a propylene group and a tetramethylene group.

Examples of the heteroatom-containing organic group include oxyalkylene groups, polyoxyalkylene groups, polycaprolactone groups and an amino group.

In the general formula (2), a is an integer of not less than 1, preferably an integer of 5 to 200, particularly preferably 5 to 120, and b is an integer of 1 to 3, preferably an integer of 1 to 2.

The polysiloxane compound (p1) to be used in the embodiments of the present invention typically has a weight average molecular weight of 100 to 50,000, particularly preferably 500 to 10,000, further preferably 1,000 to 10,000. If the weight average molecular weight is excessively low, the blocking resistance tends to be reduced. If the weight average molecular weight is excessively high, the transparency tends to be reduced.

Specific examples of the polysiloxane compound (p1) represented by the general formula (2) include X-22-170BX, X-22-170DX, X-22-176DX and X-22-176F available from Shin-Etsu Chemical Co., Ltd., and SILAPLANE FM-0411, SILAPLANE FM-0421, SILAPLANE FM-0425, SILAPLANE FM-DA11, SILAPLANE FM-DA21 and SILAPLANE FM-DA26 available from Chisso Corporation.

Examples of the polyisocyanate compound (p2) to be used in the embodiments of the present invention include: aromatic polyisocyanates such as tolylene diisocyanate, diphenylmethane diisocyanate, polyphenylmethane polyisocyanates, modified diphenylmethane diisocyanates, xylylene diisocyanate, tetramethylxylylene diisocyanate, phenylene diisocyanate and naphthalene diisocyanate; aliphatic polyisocyanates such as hexamethylene diisocyanate, trimethylhexamethylene diisocyanate, lysine diisocyanate and lysine triisocyanate; alicyclic polyisocyanates such as hydrogenated diphenylmethane diisocyanate, isophorone diisocyanate, norbornene diisocyanate, 1,3-bis(isocyanatomethyl)cyclohexane, 1,4-bis(isocyanatomethyl)cyclohexane; and trimers and oligomers of these polyisocyanates; and allophanate type polyisocyanates, biuret type polyisocyanates and water dispersed type polyisocyanates (e.g., AQUANATE 100, AQUANATE 105, AQUANATE 120 and AQUANATE 210 available from Tosoh Corporation).

These may be used alone or in combination.

Among these, isocyanate compounds having three or more isocyanate groups in the molecule thereof, particularly, trimers and oligomers of polyisocyanates are preferred, because it is possible to impart the coating film with a proper hardness and to reduce the amount of an unreacted lower-molecular-weight ingredient which may cause bleeding.

Examples of the hydroxyl group-containing (meth)acrylate compound (p3) to be used in the embodiments of the present invention include: hydroxyalkyl (meth)acrylates such as 2-hydroxyethyl (meth)acrylate, 2-hydroxypropyl (meth)acrylate, 2-hydroxybutyl (meth)acrylate, 4-hydroxybutyl (meth)acrylate and 6-hydroxyhexyl (meth)acrylate; and 2-hydroxyethylacryloyl phosphate, 2-(meth)acryloyloxyethyl-2-hydroxypropyl phthalate, caprolactone-modified 2-hydroxyethyl (meth)acrylates, dipropylene glycol (meth)acrylate, fatty acid-modified glycidyl (meth)acrylates, polyethylene

glycol mono(meth)acrylates, polypropylene glycol mono(meth)acrylates, 2-hydroxy-3-(meth)acryloyloxypropyl (meth)acrylate, glycerol di(meth)acrylate, 2-hydroxy-3-acryloyloxypropyl methacrylate, pentaerythritol tri(meth)acrylate, caprolactone-modified pentaerythritol tri(meth)acrylates, ethylene oxide-modified pentaerythritol tri(meth)acrylates, dipentaerythritol penta(meth)acrylate, caprolactone-modified dipentaerythritol penta(meth)acrylates and ethylene oxide-modified dipentaerythritol penta(meth)acrylates. These may be used alone or in combination.

Among these, pentaerythritol tri(meth)acrylate and dipentaerythritol penta(meth)acrylate are preferred, because it is possible to impart the coating film with a relatively high hardness.

Further, the polyol compound (p4) may be used as long as the effects of the embodiments of the present invention are not impaired. Examples of the polyol compound (p4) include polyether polyols, polyester polyols, polycarbonate polyols, polyolefin polyols, polybutadiene polyols and (meth)acrylic polyols. Specific examples of the polyol compound (p4) include those described for the polyol compound (b3).

The polyol compound (p4) preferably has a weight average molecular weight of 50 to 8,000, particularly preferably 100 to 5,000, further preferably 200 to 3,000. If the weight average molecular weight of the polyol compound (p4) is excessively high, the resulting cured coating film is liable to suffer from reduction in hardness and other mechanical properties. If the weight average molecular weight is excessively low, the coating film tends to be unstable with significant curing contraction.

The urethane (meth)acrylate compound (C1-1) preferably has one or more ethylenically unsaturated groups, particularly preferably three or more ethylenically unsaturated groups, further preferably six or more ethylenically unsaturated groups, for the hardness of the cured coating film.

The upper limit of the number of the ethylenically unsaturated groups contained in the urethane (meth) acrylate compound (C1-1) is typically 30, preferably not greater than 25.

The production method for the urethane (meth)acrylate compound (C1-1) is not particularly limited, but examples of the production method include:

(I) a method in which the polysiloxane compound (p1), the polyisocyanate compound (p2) (which is preliminarily allowed to react with the polyol compound (p4) if necessary) and the hydroxyl group-containing (meth) acrylate compound (p3) are simultaneously fed to be allowed to react with each other;
(II) a method in which the polysiloxane compound (p1) is allowed to react with the polyisocyanate compound (p2) (which is preliminarily allowed to react with the polyol compound (p4) if necessary), and then the resulting reaction product is allowed to react with the hydroxyl group-containing (meth)acrylate compound (p3) ;
(III) a method in which the polyisocyanate compound (p2) (which is preliminarily allowed to react with the polyol compound (p4) if necessary) is allowed to react with the hydroxyl group-containing (meth)acrylate compound (p3), and then the resulting reaction product is allowed to react with the polysiloxane compound (p1);
(IV) a method in which the polyisocyanate compound (p2) (which is preliminarily allowed to react with the polyol compound (p4) if necessary) is allowed to react with a part of the hydroxyl group-containing (meth)acrylate compound (p3), and the resulting reaction product is allowed to react with the polysiloxane compound (p1) and then with the rest of the hydroxyl group-containing (meth)acrylate compound (p3). Among these methods, the methods (II) and (IV) are preferred, and the method (II) is particularly preferred for stable control of the reactions.

Where the polyisocyanate compound (p2) is preliminarily allowed to react with the polyol compound (p4), a generally known urethane polyol production method, for example, may be employed.

In the method (II), isocyanate groups of the polyisocyanate compound (p2) are allowed to partly react with hydroxyl groups of the polysiloxane compound (p1) under isocyanate group leaving conditions, and then the remaining isocyanate groups of the polyisocyanate compound (p2) are allowed to react with hydroxyl groups of the hydroxyl group-containing (meth)acrylate compound (p3).

Where the polysiloxane compound (p1) has one hydroxyl group and the polyisocyanate compound (p2) has two isocyanate groups, for example, the reaction molar ratio between the polysiloxane compound (p1) and the polyisocyanate compound (p2) may be approximately (p1) : (p2) = 1:0.8 to 10. Where the polysiloxane compound (p1) has one hydroxyl group and the polyisocyanate compound (p2) has three isocyanate groups, for example, the reaction molar ratio between the polysiloxane compound (p1) and the polyisocyanate compound (p2) may be approximately (p1) : (p2) = 1:0.2 to 5.

The addition reaction of this reaction product with the hydroxyl group-containing (meth)acrylate compound (p3) is terminated when the amount of isocyanate groups remaining in the reaction system is reduced to 0.5 wt% or less. Thus, the urethane (meth)acrylate compound (C1-1) is produced.

Within the aforementioned molar ratio range, 0.1 to 80 parts by weight of the structural moiety derived from the polysiloxane compound (p1) is preferably contained in 100 parts by weight of the urethane (meth)acrylate compound (C1-1).

In the aforementioned reactions, a catalyst is preferably used in order to accelerate the reactions. Examples

of the catalyst include those described for the production of the urethane (meth)acrylate compound (B).

In the aforementioned reactions, an organic solvent having no functional group reactive with the isocyanate groups may be used. Examples of the organic solvent include: esters such as ethyl acetate and butyl acetate; ketones such as methyl ethyl ketone and methyl isobutyl ketone; and aromatic solvents such as toluene and xylene.

The reaction temperature is typically 30°C to 100°C, preferably 40°C to 90°C, and the reaction period is typically 2 to 10 hours, preferably 3 to 8 hours.

The urethane (meth)acrylate compound (C1-1) thus produced preferably has a weight average molecular weight of 500 to 50, 000, more preferably 500 to 30, 000. If the weight average molecular weight is excessively low, the blocking resistance tends to be reduced. If the weight average molecular weight is excessively great, the resulting cured coating film tends to have lower transparency.

A 40 % methyl isobutyl ketone solution of the urethane (meth)acrylate compound (C1-1) preferably has a viscosity of 5 to 5,000 mPa·s, particularly preferably 5 to 2,500 mPa·s, further preferably 5 to 1,000 mPa·s, at 20°C. If the viscosity falls outside the aforementioned range, the coatability tends to be reduced.

The viscosity is measured by means of a B-type viscometer.

The different types of the urethane (meth)acrylate compound (C1-1) may be used alone or in combination.

Next, the polysiloxane structure-containing urethane (meth)acrylate compound (C1-2) to be prepared by using the polysiloxane compound represented by the general formula (3) and having hydroxyl groups at its opposite terminals (hereinafter sometimes referred to simply as "urethane (meth)acrylate compound (C1-2)") will be described.

The urethane (meth)acrylate compound (C1-2) is a reaction product obtained by a reaction of the polysiloxane compound (q1) represented by the above general formula (3) and having hydroxyl groups at its opposite terminals (hereinafter sometimes referred to simply as "polysiloxane compound (q1)"), a polyisocyanate compound (q2), a hydroxyl group-containing (meth)acrylate compound (q3) and, as required, a polyol compound (q4).

In the general formula (3) for the polysiloxane compound (q1), $R^1$ and $R^3$ are each independently a hydrocarbon group or a heteroatom-containing organic group.

The hydrocarbon group typically has a carbon number of 1 to 30, preferably 1 to 20, and may be a divalent or trivalent hydrocarbon group.

An example of the divalent hydrocarbon group is an alkylene group. The alkylene group preferably has a carbon number of 1 to 10, particularly preferably 1 to 4. Examples of the alkylene group include an ethylene group, a propylene group and a tetramethylene group.

Examples of the heteroatom-containing organic group include oxyalkylene groups, polyoxyalkylene groups, polycaprolactone groups and an amino group.

In the general formula (3), $R^2$s are each independently an alkyl group, a cycloalkyl group or a phenyl group.

The alkyl group preferably has a relatively small number of carbons. More specifically, the alkyl group typically has a carbon number of 1 to 15, preferably 1 to 10, particularly preferably 1 to 5. Examples of the alkyl group include a methyl group, an ethyl group, a propyl group and a butyl group.

The cycloalkyl group typically has a carbon number of 3 to 10, preferably 5 to 8. Examples of the cycloalkyl group include a cyclopentyl group, a cyclohexyl group and a norbornyl group.

The alkyl group, the cycloalkyl group and the phenyl group may have a substituent. Typical examples of the substituent include halogen atoms, a hydroxyl group, alkoxy groups, an amino group, a mercapto group, a sulfanyl group, a vinyl group, an acryloxy group, a methacryloxy group, aryl groups and heteroaryl groups. Where the substituent has a carbon atom, the carbon atom is excluded from the carbon number of $R^2$ specified above.

In the general formula (3), a is an integer of not less than 1, preferably an integer of 5 to 200, particularly preferably 5 to 120, and b and c are each an integer of 1 to 3, preferably an integer of 1 to 2.

The polysiloxane compound (q1) typically has a weight average molecular weight of 100 to 50,000, particularly preferably 500 to 10,000, further preferably 1,000 to 10,000. If the weight average molecular weight is excessively low, the blocking resistance tends to be reduced. If the weight average molecular weight is excessively high, the transparency tends to be reduced.

Specific examples of the polysiloxane compound (q1) include X-22-160AS, KF-6001, KF-6002 and KF-6003 available from Shin-Etsu Chemical Co., Ltd., SILAPLANE FM-4411, SILAPLANE FM-4421 and SILAPLANE FM-4425 available from JNC Corporation, XF42-B0970 available from Momentive Performance Materials Japan Co., Ltd., BY 16-004 and SF 8427 available from Dow Corning Toray Co., Ltd., MACROMONOMER HK-20 available from Toagosei Co., Ltd., and DMS-C21, DMS-C23, DBL-C31 and DMS-CA21 available from GELEST Corporation.

Examples of the polyisocyanate compound (q2) include those described for the polyisocyanate compound (p2) for the urethane (meth)acrylate (C1-1).

Examples of the hydroxyl group-containing (meth)acrylate compound (q3) include those described for the hydroxyl group-containing (meth)acrylate compound (p3) for the urethane (meth)acrylate (C1-1).

Further, the polyol compound (q4) may be used as long as the effects of the embodiments of the present invention are not impaired. Examples of the polyol compound (q4) include those described for the polyol compound (p4)

for the urethane (meth) acrylate (C1-1).

The urethane (meth)acrylate compound (C1-2) preferably has two or more ethylenically unsaturated groups, and particularly preferably four or more ethylenically unsaturated groups, further preferably six or more ethylenically unsaturated groups, for the hardness of the cured coating film.

The upper limit of the number of the ethylenically unsaturated groups contained in the urethane (meth) acrylate compound (C1-2) is typically 30, preferably not greater than 25.

The production method for the urethane (meth)acrylate compound (C1-2) is not particularly limited, but examples of the production method include:

(I) a method in which the polysiloxane compound (q1), the polyisocyanate compound (q2) (which is preliminarily allowed to react with the polyol compound (q4) if necessary) and the hydroxyl group-containing (meth) acrylate compound (q3) are simultaneously fed to be allowed to react with each other;

(II) a method in which the polysiloxane compound (q1) is allowed to react with the polyisocyanate compound (q2) (which is preliminarily allowed to react with the polyol compound (q4) if necessary), and then the resulting reaction product is allowed to react with the hydroxyl group-containing (meth)acrylate compound (q3);

(III) a method in which the polyisocyanate compound (q2) (which is preliminarily allowed to react with the polyol compound (q4) if necessary) is allowed to react with the hydroxyl group-containing (meth)acrylate compound (q3), and then the resulting reaction product is allowed to react with the polysiloxane compound (q1);

(IV) a method in which the polyisocyanate compound (q2) (which is preliminarily allowed to react with the polyol compound (q4) if necessary) is allowed to react with a part of the hydroxyl group-containing (meth)acrylate compound (q3), and the resulting reaction product is allowed to react with the polysiloxane compound (q1) and then with the rest of the hydroxyl group-containing (meth)acrylate compound (q3). Among these methods, the methods (II) and (IV) are preferred, and the method (IV) is particularly preferred for stable control of the reactions and the compatibility.

Where the polyol compound (q4) is allowed to react with the polyisocyanate compound (q2), a generally known urethane polyol production method, for example, may be employed.

In the method (II), isocyanate groups of the polyisocyanate compound (q2) are allowed to partly react with hydroxyl groups of the polysiloxane compound (q1) under isocyanate group leaving conditions, and then the remaining isocyanate groups of the polyisocyanate compound (q2) are allowed to react with hydroxyl groups of the hydroxyl group-containing (meth)acrylate compound (q3).

Where the polysiloxane compound (q1) has two hydroxyl groups and the polyisocyanate compound (q2) has two isocyanate groups, for example, the reaction molar ratio between the polysiloxane compound (q1) and the polyisocyanate compound (q2) is approximately (q1) : (q2) = 1:1.1 to 2.2. Where the polysiloxane compound (q1) has two hydroxyl groups and the polyisocyanate compound (q2) has three isocyanate groups, for example, the reaction molar ratio between the polysiloxane compound (q1) and the polyisocyanate compound (q2) is approximately (p1) : (p2) = 1 : 0.5 to 2.2.

The addition reaction of the reaction product with the hydroxyl group-containing (meth)acrylate compound (q3) is terminated when the amount of isocyanate groups remaining in the reaction system is reduced to 0.5 wt% or less. Thus, the urethane (meth)acrylate compound (C1-2) is produced.

Within the aforementioned molar ratio range, 0.1 to 80 parts by weight of the structural moiety derived from the polysiloxane compound (q1) is preferably contained in 100 parts by weight of the urethane (meth)acrylate compound (C1-2).

In the aforementioned reactions, a catalyst is preferably used in order to accelerate the reaction. Examples of the catalyst include those described above.

In the aforementioned reactions, an organic solvent having no functional group reactive with the isocyanate groups may be used. Examples of the organic solvent include: esters such as ethyl acetate and butyl acetate; ketones such as methyl ethyl ketone and methyl isobutyl ketone; and aromatic solvents such as toluene and xylene.

The reaction temperature is typically 30°C to 100°C, preferably 40°C to 90°C, and the reaction period is typically 2 to 10 hours, preferably 3 to 8 hours.

The urethane (meth)acrylate compound (C1-2) thus produced typically has a weight average molecular weight of 500 to 50,000, preferably 500 to 30,000. If the weight average molecular weight is excessively low, the blocking resistance tends to be reduced. If the weight average molecular weight is excessively great, the resulting cured coating film tends to have lower transparency.

A 40 % methyl isobutyl ketone solution of the urethane (meth)acrylate compound (C1-2) preferably has a viscosity of 5 to 5,000 mPa·s, particularly preferably 10 to 2,500 mPa·s, further preferably 15 to 1,000 mPa·s, at 20°C. If the viscosity falls outside the aforementioned range, the coatability tends to be reduced.

The viscosity is measured by means of a B-type viscometer.

The different types of the urethane (meth) acrylate compound (C1-2) may be used alone or in combination.

At least one of the urethane (meth)acrylate compound (C1-1) and the urethane (meth)acrylate compound (C1-2) is preferably used as the polysiloxane structure-containing urethane (meth)acrylate compound (C1). It is preferred to use the urethane (meth)acrylate (C1-2), which is less liable to contain an unreacted residual polysiloxane compound.

Where the urethane (meth)acrylate compounds (C1-1) and (C1-2) are used in combination, the blending ratio (weight ratio) between the urethane (meth)acrylate compound (C1-1) and the urethane (meth) acrylate compound (C1-2) is preferably (C1-1)/(C1-2) = 5/95 to 95/5, particularly preferably (C1-1)/(C1-2) = 20/80 to 80/20.

The polysiloxane structure-containing compound (C) preferably has a silicon atom content of 0.1 to 80 wt%, particularly preferably 0.3 to 60 wt%, further preferably 0.5 to 30 wt%, based on the overall weight thereof.

If the silicon atom content is excessively high, the compound (C) tends to be less compatible with other ingredients. If the silicon atom content is excessively low, the amount of the compound (C) required to be blended for improvement of the blocking resistance is increased, making it difficult to balance the physical properties of the coating film.

The proportion of the polysiloxane structure-containing compound (C) is preferably 0.01 to 100 parts by weight, particularly preferably 0.1 to 75 parts by weight, further preferably 1 to 50 parts by weight, based on 100 parts by weight of the urethane (meth)acrylate compound (A) (where the urethane (meth)acrylate compound (B) is blended, based on 100 parts by weight of the total of the compounds (A) and (B)). If the proportion of the compound (C) is excessively great, the compatibility tends to be reduced. If the proportion of the compound (C) is excessively small, it will be difficult to improve the blocking resistance.

<Phosphate group-containing ethylenically unsaturated compound (D)>

Examples of the phosphate group-containing ethylenically unsaturated compound (D) to be used in the embodiments of the present invention include: phosphate group-containing ethylenically unsaturated compounds having one ethylenically unsaturated group, including 2-(meth)acryloyloxyethyl phosphate (e.g., LIGHT ESTER P-1M and LIGHT ACRYLATE P-1A available from Kyoeisha Chemical Co., Ltd., and the like), alkylene (meth)acrylate phosphates such as methylene (meth)acrylate phosphate, ethylene (meth)acrylate phosphate, propylene (meth)acrylate phosphate and tetramethylene (meth)acrylate phosphate, 1-chloromethylethylene (meth)acrylate phosphate, polyalkylene glycol mono(meth)acrylates such as polyethylene glycol monomethacrylate phosphates (e.g., Sipomer PAM100 and Sipomer PAM4000 available from Rhodia Nicca, Ltd., and the like), polyethylene glycol monoacrylate phosphates (e.g., Sipomer PAM5000 available from Rhodia Nicca, Ltd., and the like), polypropylene glycol monomethacrylate phosphates (e.g., Sipomer PAM200 available from Rhodia Nicca, Ltd., and the like) and polypropylene glycol monoacrylate phosphates (e.g., Sipomer PAM300 available from Rhodia Nicca, Ltd., and the like); phosphate group-containing ethylenically unsaturated compounds having two or more ethylenically unsaturated groups, including bis(2-(meth)acryloyloxyethyl) phosphate (e.g., LIGHT ESTER P-2M and LIGHT ACRYLATE P-2A available from Kyoeisha Chemical Co., Ltd., and the like), ethylene oxide-modified diacrylate phosphates, ethylene oxide-modified di(meth)acrylate phosphates and ethylene oxide-modified tri(meth)acrylate phosphates; and phosphate group-containing ethylenically unsaturated compounds having three or more ethylenically unsaturated groups, including triacryloyloxyethyl phosphate (e.g., BISCOAT #3PA available from Osaka Organic Chemical Industry Limited). These phosphate group-containing ethylenically unsaturated compounds (D) may be used alone or in combination.

Among these, 2-(meth)acryloyloxyethyl phosphate and bis(2-methacryloyloxyethyl) phosphate are preferred, because it is possible to easily ensure excellent adhesion to a metal surface.

The proportion of the phosphate group-containing ethylenically unsaturated compound (D) is preferably 0.01 to 10 parts by weight, particularly preferably 0.05 to 8 parts by weight, further preferably 0.1 to 5 parts by weight, especially preferably 0.2 to 3 parts by weight, based on 100 parts by weight of the urethane (meth)acrylate compound (A) (where the urethane (meth)acrylate compound (B) is blended, based on 100 parts by weight of the total of the compounds (A) and (B)). If the proportion of the phosphate group-containing ethylenically unsaturated compound (D) is excessively small, the metal surface adhesiveness tends to be reduced. If the proportion of the phosphate group-containing ethylenically unsaturated compound (D) is excessively great, the resulting cured coating film is liable to corrode a metal surface and suffer from reduction in hardness and other mechanical properties.

Thus, the active energy radiation-curable resin composition of the embodiments of the present invention contains the urethane (meth)acrylate compound (A). The active energy radiation-curable resin composition of the embodiments of the present invention preferably contains the urethane (meth)acrylate compound (A) and the urethane (meth)acrylate compound (B) (different from the urethane (meth)acrylate compound (A)). The active energy radiation-curable resin composition of the embodiments of the present invention particularly preferably contains the urethane (meth)acrylate compound (A), the urethane (meth) acrylate compound (B), and at least one of the polysiloxane structure-containing compound (C) and the phosphate group-containing ethylenically unsaturated compound (D).

The active energy radiation-curable resin composition of the embodiments of the present invention may contain a photopolymerization initiator, an ethylenically unsaturated monomer and an ethylenically unsaturated oligomer other than the aforementioned ingredients (A) to (D), an acryl resin, a surface conditioning agent, a leveling agent, a polymerization inhibitor and the like as required. The inventive resin composition may further contain an oil, an antioxidant, a flame retarder, an antistatic agent, a filler, a stabilizer, a reinforcing agent, a matting agent, an abrasive agent, organic fine particles, inorganic fine particles and the like.

Examples of the photopolymerization initiator include: acetophenones such as diethoxyacetophenone, 2-hydroxy-2-methyl-1-phenylpropan-1-one, 2-hydroxy-1-{4-[4-(2-hydroxy-2-methylpropionyl)benzyl]phenyl} -2-methylpropan-1-one, 1-[4-(2-hydroxyethoxy)phenyl]-2-hydroxy-2-methyl-1-propan-1-one, benzyl dimethyl ketal, 4-(2-hydroxyethoxy)phenyl 2-hydroxy-2-propyl ketone, 1-hydroxycyclohexyl phenyl ketone, 2-methyl-2-morpholino(4-thiomethylphenyl)propane-1-one, 2-benzyl-2-dimethylamino-1-(4-morpholinophenyl)butanone and 2-hydroxy-2-methyl-1-[4-(1-methylvinyl)phenyl]propanone oligomers; benzoins such as benzoin, benzoin methyl ether, benzoin ethyl ether, benzoin isopropyl ether and benzoin isobutyl ether; benzophenones such as benzophenone, methyl o-benzoylbenzoate, 4-phenylbenzophenone, 4-benzoyl-4'-methyldiphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzene methanaminium bromide and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone and 2-(3-dimethylamino-2-hydroxy)-3,4-dimethyl-9H-thioxanthone-9-one methochloride; acylphosphone oxides such as 2,4,6-trimethylbenzoyldiphenylphosphine oxide, bits(2,6-dimethoxybenzoyl)-2,4,4-trimethylpentylphosphine oxide and bis(2,4,6-trimethylbenzoyl)phenylphosphine oxide. These photopolymerization initiators may be used alone or in combination.

Further, an auxiliary agent such as triethanolamine, triisopropanolamine, 4,4'-dimethylaminobenzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2, 4-diethylthioxanthone or 2,4-diisopropylthioxanthone may be used in combination with the photopolymerization initiator.

Among these, benzyl dimethyl ketal, 1-hydroxycyclohexyl phenyl ketone, benzoin isopropyl ether, 4-(2-hydroxyethoxy)phenyl (2-hydroxy-2-propyl) ketone and 2-hydroxy-2-methyl-1-phenylpropane-1-one are preferably used.

The proportion of the photopolymerization initiator is preferably 0.1 to 20 parts by weight, particularly preferably 0.5 to 10 parts by weight, further preferably 1 to 10 parts by weight, based on 100 parts by weight of the urethane (meth)acrylate compound (A) (where the urethane (meth)acrylate compound (B) is further blended, based on 100 parts by weight of the total of the compounds (A) and (B)). If the proportion of the photopolymerization initiator is excessively small, it will be difficult to form a film because of insufficient curing. If the proportion of the photopolymerization initiator is excessively great, the resulting cured coating film is liable to suffer from yellowing and other coloration problem.

Examples of the ethylenically unsaturated monomer and the ethylenically unsaturated oligomer other than the ingredients (A) to (D) include monofunctional monomers, difunctional monomers, tri-and higher-functional monomers, and oligomers such as of epoxy(meth)acrylate compounds and polyester (meth)acrylate compounds.

Examples of the monofunctional monomers include: styrene monomers such as styrene, vinyl toluene, chlorostyrene and $\alpha$-methylstyrene; (meth) acrylate monomers such as methyl (meth) acrylate, ethyl (meth)acrylate, acrylonitrile, 2-methoxyethyl (meth)acrylate, 2-hydroxyethyl (meth)acrylate, 2-hydroxypropyl (meth)acrylate, 2-hydroxybutyl (meth)acrylate, phenoxyethyl (meth)acrylate, 2-phenoxy-2-hydroxypropyl (meth)acrylate, 2-hydroxy-3-phenoxypropyl (meth)acrylate, 3-chloro-2-hydroxypropyl (meth)acrylate, glycerol mono(meth)acrylate, glycidyl (meth)acrylate, lauryl (meth)acrylate, cyclohexyl (meth)acrylate, isobornyl (meth)acrylate, tricyclodecanyl (meth)acrylate, dicyclopentenyl (meth) acrylate, dicyclopentenyloxyethyl (meth)acrylate, dicyclopentanyl (meth)acrylate, (2-methyl-2-ethyl-1,3-dioxolane-4-yl)methyl (meth)acrylate, cyclohexane spiro-2-(1,3-dioxolan-4-yl)methyl (meth)acrylate, cyclic trimethylolpropane formal acrylate, 3-ethyl-3-oxetanylmethyl (meth) acrylate, $\gamma$-butyrolactone (meth)acrylate, n-butyl (meth)acrylate, hexyl (meth)acrylate, heptyl (meth)acrylate, octyl (meth)acrylate, nonyl (meth)acrylate, decyl (meth)acrylate, isodecyl (meth)acrylate, dodecyl (meth)acrylate, n-stearyl (meth)acrylate, benzyl (meth)acrylate, phenol ethylene oxide-modified (n = 2) (meth)acrylate, nonylphenol propylene oxide-modified (n = 2.5) (meth)acrylate, 2-(meth)acryloyloxyethyl acid phosphate, a half (meth)acrylate of a phthalic acid derivative (e.g., 2-(meth)acryloyloxy-2-hydroxypropyl phthalate), furfuryl (meth)acrylate, tetrahydrofurfuryl (meth)acrylate, carbitol (meth)acrylate, benzyl (meth)acrylate, butoxyethyl (meth)acrylate, allyl (meth)acrylate, (meth)acryloyl morpholine and polyoxyethylene secondary alkylether acrylates; and 2-hydroxyethyl acrylamide, N-methylol (meth)acrylamide, N-vinylpyrrolidone, 2-vinylpyridine and vinyl acetate.

Examples of the difunctional monomers include ethylene glycol di(meth)acrylate, diethylene glycol di (meth) acrylate, tetraethylene glycol di (meth) acrylate, polyethylene glycol di(meth)acrylates, propylene glycol di(meth)acrylate, dipropylene glycol di(meth)acrylate, polypropylene glycol di(meth)acrylates, butylene glycol di(meth)acrylate, neopentyl glycol di(meth)acrylate, ethylene oxide-modified bisphenol-A di(meth)acrylates, propylene oxide-modified bisphenol-A di(meth)acrylates, cyclohexane dimethanol di(meth)acrylate, ethoxylated cyclohexane dimethanol di(meth)acrylate, dimethyloldicyclopentane di(meth)acrylate, tricyclodecane dimethanol di(meth)acrylate, 1,6-hexanediol di(meth)acrylate, glycerol di(meth)acrylate, pentaerythritol di(meth)acrylate, ethylene glycol diglycidyl ether di(meth)acrylate, diethylene glycol diglycidyl ether di(meth)acrylate, diglycidyl phthalate di(meth)acrylate, hydroxypivalic acid-modified neopentyl glycol di(meth)acrylates and isocyanuric acid ethylene oxide-modified diacrylates.

Examples of tri- or higher-functional monomers include trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(meth)acryloyloxyethoxytrimethylolpropane, glycerol polyglycidyl ether poly(meth)acrylates, isocyanuric acid ethylene oxide-modified triacrylates, caprolactone-modified dipentaerythritol penta(meth)acrylates, caprolactone-modified dipentaerythritol hexa(meth)acrylates, caprolactone-modified pentaerythritol tri (meth) acrylates, caprolactone-modified pentaerythritol tetra(meth)acrylates, ethylene oxide-modified dipentaerythritol penta(meth)acrylates, ethylene oxide-modified dipentaerythritol hexa(meth)acrylates, ethylene oxide-modified pentaerythritol tri(meth)acrylates, ethylene oxide-modified pentaerythritol tetra(meth)acrylates and ethoxylated glycerol triacrylates.

Further, an Michael adduct of acrylic acid or a 2-acryloyloxyethyl dicarboxylic acid monoester may be used in combination. Examples of the Michael adduct include an acrylic acid dimer, a methacrylic acid dimer, an acrylic acid trimer, a methacrylic acid trimer, an acrylic acid tetramer and a methacrylic acid tetramer.

The 2-acryloyloxyethyl dicarboxylic acid monoester is a carboxylic acid having a specific substituent. Examples of the 2-acryloyloxyethyl dicarboxylic acid monoester include 2-acryloyloxyethyl monosuccinate, 2-methacryloyloxyethyl monosuccinate, 2-acryloyloxyethyl monophthalate, 2-methacryloyloxyethyl monophthalate, 2-acryloyloxyethyl monohexahydrophthalate and 2-methacryloyloxyethyl monohexahydrophthalate. Other examples include oligoester acrylates.

Examples of the surface conditioning agent include a cellulose resin and an alkyd resin. The cellulose resin improves the surface smoothness of the coating film, and the alkyd resin ensures proper film formability when the resin composition is applied.

A generally known leveling agent is usable as the leveling agent, as long as it can impart the coating liquid with a base wetting effect and a surface tension reducing effect. Examples of the leveling agent include silicone-modified resins, fluorine-modified resins and alkyl-modified resins.

Examples of the polymerization inhibitor include p-benzoquinone, naphthoquinone, toluquinone, 2,5-diphenyl-p-benzoquinone, hydroquinone, 2,5-di-t-butylhydroquinone, methylhydroquinone, hydroquinone monomethyl ether, mono-t-butylhydroquinone and p-t-butylcatechol.

As required, the active energy radiation-curable resin composition of the embodiments of the present invention may be diluted with an organic solvent so as to be imparted with proper viscosity for coating. Examples of the organic solvent include: alcohols such as methanol, ethanol, propanol, n-butanol and i-butanol; ketones such as acetone, methyl isobutyl ketone, methyl ethyl ketone and cyclohexanone; cellosolves such as ethyl cellosolve; aromatic solvents such as toluene and xylene; glycol ethers such as propylene glycol monomethyl ether; acetates such as methyl acetate, ethyl acetate and butyl acetate; and diacetone alcohol. These organic solvents may be used alone or in combination.

Two or more organic solvents are preferably selected from the glycol ethers, the ketones and the alcohols for use in combination from the aesthetic viewpoint of the coating film.

For the production of the active energy radiation-curable resin composition of the embodiments of the present invention, the method of mixing the ingredients (A) to (D) and other ingredients is not particularly limited, but various mixing methods may be employed.

The active energy radiation-curable resin composition of the embodiments of the present invention can be effectively used as a curable resin composition such as a top coating agent and an anchor coating agent to be applied onto various bases for formation of a coating film. The active energy radiation-curable resin composition is applied onto a base (and, where the resin composition diluted with the organic solvent is applied onto the base, the organic solvent is dried), and then irradiated with active energy radiation. Thus, the resin composition is cured.

Examples of the base onto which the active energy radiation-curable resin composition of the embodiments of the present invention is to be applied include plastic bases (films, sheets, cups and the like) formed or molded from polyolefin resins, polyester resins, polycarbonate resins, acrylic resins, acrylonitrile butadiene styrene copolymers (ABS) and polystyrene resins, composite bases such as produced by combining any of these plastic bases, composite bases such as produced by mixing glass fibers or an inorganic material with any of the aforementioned materials, metal bases (such as of aluminum, copper, iron, stainless steel, zinc, magnesium, alloys of any of these metals, metal vapor deposition films, and the like), and a base including a glass base and a primer layer formed on the glass base.

Exemplary methods of applying the active energy radiation-curable resin composition include wet coating methods such as a spray method, a shower method, a dipping method, a dispenser method, a roll method, a spin method, a screen printing method and an inkjet printing method. The resin composition is typically applied onto the base under room temperature conditions.

The active energy radiation-curable resin composition of the embodiments of the present invention is typically diluted to a solid concentration of 3 to 90 wt%, preferably 5 to 60 wt%, with the organic solvent for coating.

Where the resin composition is diluted with the organic solvent, the drying conditions are typically a drying temperature of 40°C to 120°C and a drying period of 1 to 20 minutes, and preferably a drying temperature of 50°C to 100°C and a drying period of 2 to 10 minutes.

Examples of the active energy radiation to be used for curing the active energy radiation-curable resin composition applied on the base include light radiations such as far ultraviolet radiation, ultraviolet radiation, near ultraviolet

radiation and infrared radiation, electromagnetic radiations such as X-ray and γ-ray, electron radiation, proton radiation and neutron radiation. It is advantageous to use the ultraviolet radiation for the curing in consideration of the curing speed and the costs and the availability of an irradiation device. Where the irradiation with the electron radiation is employed, the resin composition is curable without the use of the photopolymerization initiator.

When the resin composition is cured by the irradiation with the ultraviolet radiation, the ultraviolet radiation is typically emitted at 30 to 3000 mJ/cm$^2$ (preferably 100 to 1500 mJ/cm$^2$) from a high pressure mercury lamp, a ultra-high pressure mercury lamp, a carbon arc lamp, a metal halide lamp, a xenon lamp, a chemical lamp, an electrodeless discharge lamp, an LED or the like which is capable of emitting light of a wavelength of 150 to 450 nm.

After the irradiation with the ultraviolet radiation, the resin composition may be completely cured by heating as required.

The thickness of the coating film (cured coating film), which is associated with the depth of a scratch expected to be resiliently recovered, may be properly determined so as to be greater than the scratch depth. The coating film typically has a thickness of 3 to 1000 μm, preferably 5 to 500 μm, particularly preferably 10 to 200 μm, in consideration of the light transmission of the UV-curable coating film for uniform reaction of the photopolymerization initiator.

The urethane (meth)acrylate compound (A) of the embodiments of the present invention is a urethane (meth) acrylate compound produced by the reaction of the hydroxyl group-containing (meth)acrylate compound (x) having the structural moiety derived from ε-caprolactone with the polyvalent isocyanate compound (y), wherein the polyvalent isocyanate compound (y) has an average isocyanate group number of not less than 3.2. The urethane (meth)acrylate compound (A) is used for preparation of the active energy radiation-curable resin composition, which is formed into a cured coating film. The cured coating film is excellent in scratch resilience and blocking resistance with good balance. Where the active energy radiation-curable resin composition further contains the urethane (meth)acrylate compound (B) (different from the urethane (meth)acrylate compound (A)), the resulting cured coating film has a higher surface hardness. Where the active energy radiation-curable resin composition further contains the polysiloxane structure-containing compound (C), the cured coating film is excellent in blocking resistance. Where the active energy radiation-curable resin composition further contains the phosphate group-containing ethylenically unsaturated compound (D), the cured coating film is excellent in metal base adhesiveness. Therefore, the active energy radiation-curable resin composition is useful for a paint, an ink and a coating agent, and particularly useful for an outermost surface coating agent and a metal surface coating agent.

EXAMPLES

The embodiments of the present invention will hereinafter be described more specifically by way of examples thereof. It should be understood that the present invention be not limited to the following examples within the scope of the invention. In the examples, "part(s)" and "%" respectively mean "part(s) by weight" and wt%" unless otherwise specified.

[1] System employing urethane (meth)acrylate compound (A) alone

<(A) alone>

The following compounds were prepared as the urethane (meth)acrylate compound (A) (see Table 1).

<Example 1: Urethane (meth)acrylate compound (A-1)>

First, 353 g (0.37 mol) of a biuret type oligomer (y) of hexamethylene diisocyanate having an average isocyanate group number of 4.9, 647 g (1.88 mol) of a 2-mol caprolactone adduct (x) of 2-hydroxyethyl acrylate, 0.02 g of hydroquinone methyl ether as a polymerization inhibitor and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 6 hours. Then, the reaction was terminated when the amount of the remaining isocyanate groups reached 0.3 %. Thus, a urethane (meth)acrylate compound (A-1) (having a weight average molecular weight (Mw) of 4,000 and an ethylenically unsaturated group content of 1.88 mmol/g) was obtained.

<Example 2: Urethane (meth)acrylate compound (A-2)>

First, 342 g (0.46 mol) of a biuret type oligomer (y) of hexamethylene diisocyanate having an average isocyanate group number of 4.1, 658 g (1.91 mol) of a 2-mol caprolactone adduct (x) of 2-hydroxyethyl acrylate, 0.02 g of hydroquinone methyl ether as a polymerization inhibitor and 0.02 g of dibutyltin dilaurate as a reaction catalyst were fed into a four-necked flask provided with a thermometer, a stirrer, a water-cooled condenser and a nitrogen gas blowing inlet, and

allowed to react with each other at 60°C for 6 hours. Then, the reaction was terminated when the amount of the remaining isocyanate groups reached 0.3 %. Thus, a urethane (meth)acrylate compound (A-2) (having a weight average molecular weight (Mw) of 3,600 and an ethylenically unsaturated group content of 1.91 mmol/g) was obtained.

<Example 3: Urethane (meth)acrylate compound (A-3)>

First, 330.6 g (0.40 mol) of an isocyanurate type oligomer (y) of hexamethylene diisocyanate having an average isocyanate group number of 4.2, 669.4 g (1.95 mol) of a 1-mol caprolactone adduct (x) of 2-hydroxyethyl acrylate, 0.02 g of hydroquinone methyl ether as a polymerization inhibitor and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 6 hours. Then, the reaction was terminated when the amount of the remaining isocyanate groups reached 0.3 %. Thus, a urethane (meth)acrylate compound (A-3) (having a weight average molecular weight (Mw) of 4,930 and an ethylenically unsaturated group content of 1.95 mmol/g) was obtained.

<Example 4: Urethane (meth)acrylate compound (A-4)>

First, 400.6 g (0.65 mol) of an isocyanurate type oligomer (y) of hexamethylene diisocyanate having an average isocyanate group number of 3.4, 599.4 g (2.60 mol) of a 1-mol caprolactone adduct (x) of 2-hydroxyethyl acrylate, 0.02 g of hydroquinone methyl ether as a polymerization inhibitor and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 6 hours. Then, the reaction was terminated when the amount of the remaining isocyanate groups reached 0.3 %. Thus, a urethane (meth)acrylate compound (A-4) (having a weight average molecular weight (Mw) of 2,920 and an ethylenically unsaturated group content of 2.60 mmol/g) was obtained.

<Comparative Example 1: Urethane (meth)acrylate compound (A'-1)>

First, 350.3 g (0.63 mol) of a biuret type oligomer (y) of hexamethylene diisocyanate having an average isocyanate group number of 3.0, 649.7 g (1.89 mol) of a 2-mol caprolactone adduct (x) of 2-hydroxyethyl acrylate, 0.02 g of hydroquinone methyl ether as a polymerization inhibitor and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 6 hours. Then, the reaction was terminated when the amount of the remaining isocyanate groups reached 0.3 %. Thus, a urethane (meth)acrylate compound (A'-1) (having a weight average molecular weight (Mw) of 3,470 and an ethylenically unsaturated group content of 1.89 mmol/g) was obtained.

<Comparative Example 2: Urethane (meth)acrylate compound (A'-2)>

First, 409.8 g (0.54 mol) of an isocyanurate type oligomer (y) of isophorone diisocyanate having an average isocyanate group number of 3.0, 590.2 g (1.72 mol) of a 2-mol caprolactone adduct (x) of 2-hydroxyethyl acrylate, 0.02 g of hydroquinone methyl ether as a polymerization inhibitor and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 6 hours. Then, the reaction was terminated when the amount of the remaining isocyanate groups reached 0.3 %. Thus, a urethane (meth)acrylate compound (A'-2) (having a weight average molecular weight (Mw) of 4,260 and an ethylenically unsaturated group content of 1.72 mmol/g) was obtained.

<Active energy radiation-curable resin composition>

Active energy radiation-curable resin compositions were prepared by blending 100 parts of each of the urethane (meth) acrylate compounds (A-1) to (A-4) obtained in Examples 1 to 4 and the urethane (meth) acrylate compounds (A'-1) and (A'-2) obtained in Comparative Examples 1 and 2 and 4 parts of a photopolymerization initiator (IRGACURE 184 available from BASF GmbH) and adding toluene to a solid concentration of 80 %.

The active energy radiation-curable resin compositions thus prepared were each evaluated for resilience and blocking resistance in the following manner. The evaluation results are shown in table 1.

<Resilience>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the

resulting coating film was dried at 90°C for 6 minutes. Thereafter, the resulting coating film was irradiated with ultraviolet radiation emitted from a height of 18 cm by means of a single 80-W high pressure mercury lamp (at a cumulative dose of 1000 $mJ/cm^2$) three times while being transported at a conveyor speed of 3.4 m/min. Thus, a cured coating film was obtained.

The cured coating film thus obtained was scratched with a two-row brass brush at 23°C at 50 %Rh by moving the brush back and forth five times on the coating film, and time required for making the scratches invisible was measured. The coating film was evaluated based on the following criteria.

(Evaluation criteria)

○: The scratches became invisible in one minute.
Δ: The scratches became invisible in one to ten minutes.
×: The scratches were visible even after a lapse of 10 minutes.

<Blocking resistance>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 6 minutes. Thereafter, the resulting coating film was irradiated with ultraviolet radiation emitted from a height of 18 cm by means of a single 80-W high pressure mercury lamp (at a cumulative dose of 1000 $mJ/cm^2$) three times while being transported at a conveyor speed of 3.4 m/min. Thus, a cured coating film was obtained.

A polyethylene terephthalate (PET) film was placed on a front surface of the cured coating film obtained in the aforementioned manner, and then combined with the cured coating film by moving a roller back and force once on the PET film with a load of 2 kg at 23°C at 50 %Rh. After a lapse of 5 minutes, the PET film was peeled off, whereby the adhesiveness of the front surface of the cured coating film was measured. The cured coating film was evaluated based on the following evaluation criteria.

(Evaluation criteria)

○○: The PET film did not adhere to the cured coating film at all.
○: The PET film slightly adhered to the cured coating film, but no adhesion trace was left.
Δ: The PET film adhered to the cured coating film, but no adhesion trace was left.
×: The PET film adhered to the cured coating film, and an adhesion trace was left.

Table 1 <(A) alone>

| | Example 1 | Example 2 | Example 3 | Example 4 | Comparative Example 1 | Comparative Example 2 |
|---|---|---|---|---|---|---|
| Urethane (meth)acrylate Compound | | | | | | |
| Type | A-1 (100) | A-2 (100) | A-3 (100) | A-4 (100) | A' -1 (100) | A' -2 (100) |
| Ethylenically unsaturated group number of hydroxyl group-containing acrylate compound (x) | 1 | 1 | 1 | 1 | 1 | 1 |
| Average isocyanate group number of polyvalent isocyanate compound (y) | 4.9 | 4.1 | 4.2 | 3.4 | 3.0 | 3.1 |
| Weight average molecular weight | 4,000 | 3,600 | 4,930 | 2,920 | 3,470 | 4,260 |

(continued)

| | Example 1 | Example 2 | Example 3 | Example 4 | Comparative Example 1 | Comparative Example 2 |
|---|---|---|---|---|---|---|
| Amount of ethylenically unsaturated group (mmol/g) | 1.88 | 1.91 | 1.95 | 2.60 | 1.89 | 1.72 |
| Evaluation | | | | | | |
| Resilience | ○ | ○ | ○ | Δ | × | × |
| Blocking resistance | ○ | Δ | Δ | ○○ | ○○ | ○○ |
| (Note) Parenthesized numerals each indicate proportion (parts) of blended compound. | | | | | | |

The evaluation results indicate that the cured coating films formed from the active energy radiation-curable resin compositions prepared by using the urethane (meth)acrylate compounds (A-1) to (A-4) of Examples 1 to 4 are excellent in resilience and blocking resistance with good balance.

In contrast, the cured coating films formed from the active energy radiation-curable resin compositions prepared by using the urethane (meth) acrylate compounds (A' -1) and (A' -2) of Comparative Examples 1 and 2 containing the polyvalent isocyanate compounds each having a smaller average isocyanate group number are excellent in blocking resistance, but poorer in resilience.

[2] System employing urethane (meth)acrylate compound (A) and other urethane (meth)acrylate compound (B) in combination

<(A) + (B)>

<Examples 5 to 10>

Active energy radiation-curable resin compositions were prepared by blending the above urethane (meth)acrylate compound (A-2) and the following urethane (meth)acrylate compounds (B-1) to (B-3) in proportions shown in Table 2 with 4 parts of a photopolymerization initiator (IRGACURE 184 available from BASF GmbH) and adding methyl isobutyl ketone to a solid concentration of 80 %.

The active energy radiation-curable resin compositions thus prepared were each evaluated for resilience, blocking resistance and surface hardness in the following manner. The evaluation results are shown in Table 2.

<Reference Example 1>

An active energy radiation-curable resin composition was prepared and evaluated in substantially the same manner as in Example 5, except that the proportion of the urethane (meth)acrylate compound (A-2) was 100 parts and the urethane (meth)acrylate compound (B) was not blended. The evaluation results are shown in Table 2.

<Urethane (meth)acrylate compound (B-1)>

First, 37.5 g (0.17 mol) of isophorone diisocyanate, 25.5 g (0.04 mol) of polytetramethylene glycol (having a hydroxyl group value of 167 mgKOH/g and a molecular weight of 672 as calculated based on the hydroxyl group value), 13.4 g (0.02 mol) of polyester triol (having a hydroxyl group value of 262 mgKOH/g and a molecular weight of 642 as calculated based on the hydroxyl group value) and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 80°C. When the amount of the remaining isocyanate groups was reduced to 11 % or less, 23.6 g (0.2 mol) of 2-hydroxyetyl acrylate and 0.04 g of methoxyphenol as a polymerization inhibitor were further fed into the flask, and allowed to react with the reaction product at 60°C. Then, the reaction was terminated when the amount of the remaining isocyanate groups was reduced to 0.3 % or less. Thus, the urethane (meth)acrylate compound (B-1) (having a functional group number of 2 to 3 and a weight average molecular weight of about 3,500) was obtained.

<Urethane (meth)acrylate compound (B-2)>

First, 29.9 g (0.14 mol) of isophorone diisocyanate, 54.2 g (0.07 mol) of polycarbonate diol (having a hydroxyl group value of 139.5 mgKOH/g and a molecular weight of 804 as calculated based on the hydroxyl group value) and 0.02 g of dibutyltin dilaurate as a reaction catalyst were fed into a four-necked flask provided with a thermometer, a stirrer, a water-cooled condenser and a nitrogen gas blowing inlet, and allowed to react with each other at 60°C. When the amount of the remaining isocyanate groups was reduced to 6.7 % or less, 15.9 g (0.14 mol) of 2-hydroxyetyl acrylate and 0.04 g of methoxyphenol as a polymerization inhibitor were further fed into the flask, and allowed to react with the reaction product at 60°C. Then, the reaction was terminated when the amount of the remaining isocyanate groups was reduced to 0.3 % or less. Thus, the urethane (meth)acrylate compound (B-2) (having a functional group number of 2 and a weight average molecular weight of about 5,000) was obtained.

<Urethane (meth)acrylate compound (B-3)>

First, 60.4 g (0.10 mol) of a hexamethylene diisocyanate trimer was fed into a four-necked flask provided with a thermometer, a stirrer, a water-cooled condenser and a nitrogen gas blowing inlet, and 0.2 g of hydroquinone methyl ether was added as a polymerization inhibitor to the flask. Then, 39.6 g (0.30 mol) of 2-hydroxypropyl acrylate was added dropwise into the flask while the internal temperature of the flask was controlled at not higher than 70°C. After completion of the dropwise addition, the reaction was allowed to proceed at 70°C, and terminated when the remaining isocyanate concentration was reduced to 0.3 % or less. Thus, the urethane (meth)acrylate compound (B-3) (having a functional group number of 3 and a weight average molecular weight of about 2,300) was obtained.

<Resilience>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 mJ/cm$^2$) twice while being transported at a conveyor speed of 3.4 m/min. Thus, a cured coating film was obtained.

The cured coating film thus obtained was scratched with a two-row brass brush at 23°C at 50 %Rh by moving the brush back and forth five times on the coating film, and time required for making the scratches invisible was measured. The coating film was evaluated based on the following criteria.

(Evaluation criteria)

○: The scratches became invisible in one minute.
Δ: The scratches became invisible in one to ten minutes.
×: The scratches were visible even after a lapse of 10 minutes.

<Blocking resistance>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 mJ/cm$^2$) twice while being transported at a conveyor speed of 3.4 m/min. Thus, a cured coating film was obtained.

A PET film was placed on a front surface of the cured coating film obtained in the aforementioned manner, and then combined with the cured coating film by moving a roller back and force once on the PET film with a load of 2 kg at 23°C at 50 %Rh. After a lapse of 5 minutes, the PET film was peeled off, whereby the adhesiveness of the front surface of the cured coating film was measured. The cured coating film was evaluated based on the following evaluation criteria.

(Evaluation criteria)

○○: The PET film did not adhere to the cured coating film at all.
○: The PET film slightly adhered to the cured coating film, but no adhesion trace was left.
Δ: The PET film adhered to the cured coating film, but no adhesion trace was left.
×: The PET film adhered to the cured coating film, and an adhesion trace was left.

<Surface hardness>

The active energy radiation-curable resin compositions prepared in the aforementioned manner were each applied onto a 125-μm thick easily-adhesive PET film (A4300 available from Toyobo Co., Ltd.) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 mJ/cm$^2$) twice while being transported at a conveyor speed of 3.4 m/min. Thus, a cured coating film was obtained.
The pencil hardness of the cured coating film thus obtained was measured in conformity with JIS K5600-5-4.

Table 2 <(A) + (B)>

| | Example 5 | Example 6 | Example 7 | Example 8 | Example 9 | Example 10 | Reference Example 1 |
|---|---|---|---|---|---|---|---|
| Active energy radiation-curable resin composition | | | | | | | |
| Urethane (meth)acrylate compound (A) | A-2 (80) | A-2 (70) | A-2 (80) | A-2 (70) | A-2 (80) | A-2 (70) | A-2 (100) |
| Urethane (meth)acrylate compound (B) | B-1 (20) | B-1 (30) | B-2 (20) | B-2 (30) | B-3 (20) | B-3 (30) | - |
| Evaluation | | | | | | | |
| Resilience | ○ | ○ | ○ | ○ | ○ | Δ | ○ |
| Blocking resistance | Δ | Δ | Δ | Δ | Δ | Δ | Δ |
| Surface hardness | F | F | F | F | F | F | HB |
| (Note) Parenthesized numerals each indicate proportion (parts) of blended compound. | | | | | | | |

The evaluation results indicate that the cured coating films formed from the active energy radiation-curable resin compositions of Examples 5 to 10 are excellent in resilience and blocking resistance with good balance, and also excellent in surface hardness. Further, the cured coating films of Examples 5 to 10 are more excellent in surface hardness than the cured coating film formed from the active energy radiation-curable resin composition of Reference Example 1 not containing the urethane (meth)acrylate compound (B).

[3] System employing urethane (meth)acrylate compound (A) and polysiloxane structure-containing compound (C) in combination

[3-1] Urethane (meth)acrylate compound (A) + Polysiloxane structure-containing compound (C)

<Examples 11 to 15 and Reference Example 2>

Active energy radiation-curable resin compositions were prepared by blending the above urethane (meth)acrylate compound (A-2) and the following polysiloxane structure-containing compounds (C-1) and (C-2) in proportions shown in Table 3 with 4 parts of a photopolymerization initiator (IRGACURE 184 available from BASF GmbH) and adding methyl isobutyl ketone to a solid concentration of 40 %.
The active energy radiation-curable resin compositions were each evaluated for resilience, blocking resistance and transparency (haze) in the following manner. The evaluation results are shown in Table 3.

<Polysiloxane structure-containing compound (C-1)>

First, 69.1 g of a hexamethylene diisocyanate trimer (q2) (having an isocyanate group content of 21.0 %), 172.6 g of a polysiloxane compound (q1) (represented by the general formula (3), wherein $R^1$ = $-C_2H_4OC_3H_6-$, $R^2$ = methyl group, $R^3$ = $-C_3H_6OC_2H_4-$, b = 1 and C = 1, and having a weight average molecular weight of 6000), 500 g of methyl isobutyl ketone, 1.0 g of hydroquinone methyl ether as a polymerization inhibitor and 0.1 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 3 hours. When the amount of the remaining isocyanate reached 4.0 %, 258.3 g of dipentaerythritol pentaacrylate (q3) (a mixture of dipentaerythritol pentaacrylate and dipentaerythritol hexaacrylate having a hydroxyl group value of 50 mgKOH/g) was fed into the flask, and the reaction was allowed to continuously proceed as it was. The reaction was terminated when the isocyanate groups were completely consumed. Thus, a solution of the polysiloxane group-containing urethane (meth)acrylate compound (C-1) (having a solid concentration of 50 %) was obtained.

<Polysiloxane structure-containing compound (C-2)>

First, 115.7 g of an isophorone diisocyanate trimer (q2) (having an isocyanate group content of 17.2 %), 236.7 g of a polysiloxane compound (q1) (represented by the general formula (3), wherein $R^1$ = $-C_2H_4OC_3H_6-$, $R^2$ = methyl group, $R^3$ = $-C_3H_6OC_2H_4-$, b = 1 and C = 1, and having a weight average molecular weight of 6000), 500 g of methyl isobutyl ketone, 0.5 g of 2,6-di-tert-butylcresol as a polymerization inhibitor and 0.05 g of dibutyltin dilaurate as a reaction catalyst were fed into a four-necked flask provided with a thermometer, a stirrer, a water-cooled condenser and a nitrogen gas blowing inlet, and allowed to react with each other at 60°C for 3 hours. When the amount of the remaining isocyanate reached 3.8 %, 147.6 g of pentaerythritol triacrylate (q3) (a mixture of pentaerythritol triacrylate and pentaerythritol tetraacrylate having a hydroxyl group value of 120 mgKOH/g) was fed into the flask, and the reaction was allowed to continuously proceed as it was. The reaction was terminated when the isocyanate groups were completely consumed. Thus, a solution of the polysiloxane group-containing urethane (meth)acrylate compound (C-2) (having a solid concentration of 50 %) was obtained.

<Resilience>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 mJ/cm$^2$) twice while being transported at a conveyor speed of 3.4 m/min. Thus, a cured coating film was obtained.

The cured coating film thus obtained was scratched with a two-row brass brush at 23°C at 50 %Rh by moving the brush back and forth five times on the coating film, and time required for making the scratches invisible was measured. The coating film was evaluated based on the following criteria. The results are shown below in Table 3.

(Evaluation criteria)

○: The scratches became invisible in one minute.
Δ: The scratches became invisible in one to ten minutes.
×: The scratches were visible even after a lapse of 10 minutes.

<Blocking resistance>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 mJ/cm$^2$) twice while being transported at a conveyor speed of 3.4 m/min. Thus, a cured coating film was obtained.

A PET film was placed on a front surface of the cured coating film obtained in the aforementioned manner, and then combined with the cured coating film by moving a roller back and force once on the PET film with a load of 2 kg at

23°C at 50 %Rh. After a lapse of 5 minutes, the PET film was peeled off, whereby the adhesiveness of the front surface of the cured coating film was measured. The cured coating film was evaluated based on the following evaluation criteria. The results are shown below in Table 3.

(Evaluation criteria)

○○: The PET film did not adhere to the cured coating film at all.
○: The PET film slightly adhered to the cured coating film, but no adhesion trace was left.
Δ: The PET film adhered to the cured coating film, but no adhesion trace was left.
×: The PET film adhered to the cured coating film, and an adhesion trace was left.

<Transparency>

The active energy radiation-curable resin compositions prepared in the aforementioned manner were each applied onto a 125-μm thick easily-adhesive PET film (A4300 available from Toyobo Co., Ltd.) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.
The haze value of a combination of the PET film and the cured coating film thus obtained was measured by means of a haze meter (NDH 2000 available from Nippon Denshoku Industries Co., Ltd.) The PET film per se had a haze value of 0.52 %.
The evaluation criteria are as follows:

(Evaluation criteria)

○: Haze value was less than 1.0 %.
Δ: Haze value was not less than 1.0 % and less than 3.0 %.
×: Haze value was not less than 3.0 %.

Table 3 <(A) + (C)>

| | Example 11 | Example 12 | Example 13 | Example 14 | Example 15 | Reference Example 2 |
|---|---|---|---|---|---|---|
| Active energy radiation-curable resin composition | | | | | | |
| Urethane (meth)acrylate compound (A) | A-2 (100) | A-2 (100) | A-2 (100) | A-2 (100) | A-2 (100) | A-2 (100) |
| Polysiloxane structure-containing compound (C) | C-1 (0.5) | C-1 (3) | C-1 (10) | C-2 (0.5) | C-2 (3) | - |
| Evaluation | | | | | | |
| Resilience | ○ | ○ | ○ | ○ | ○ | ○ |
| Blocking resistance | ○ | ○ | ○○ | ○ | ○ | Δ |
| Transparency (haze) (%) | ○ [0.38] | ○ [0.36] | ○ [0.35] | ○ [0.54] | Δ [1.19] | ○ [0.34] |
| (Note) Parenthesized numerals each indicate proportion (parts) of blended compound. | | | | | | |

The evaluation results indicate that the cured coating films formed from the active energy radiation-curable resin compositions of Examples 11 to 15 employing the urethane (meth)acrylate compound (A) and the polysiloxane structure-containing compound (C) in combination are excellent in resilience, blocking resistance and transparency. The cured coating films of Examples 11 to 15 are more excellent in blocking resistance than the cured coating film formed

from the active energy radiation-curable resin composition of Reference Example 2 not containing the polysiloxane structure-containing compound (C).

[3-2] Urethane (meth)acrylate compound (A) + Other urethane (meth) acrylate compound (B) + Polysiloxane structure-containing compound (C)

<Examples 16 to 20>

Active energy radiation-curable resin compositions were prepared by blending the above urethane (meth)acrylate compound (A-2), the above urethane (meth)acrylate compound (B-1) and the above polysiloxane structure-containing compounds (C-1) and (C-2) in proportions shown in Table 4 with 4 parts of a photopolymerization initiator (IRGACURE 184 available from BASF GmbH) and adding methyl isobutyl ketone to a solid concentration of 40 %.

The active energy radiation-curable resin compositions thus prepared were each evaluated for resilience, blocking resistance and transparency (haze) in the aforementioned manner, and further evaluated for surface hardness in the following manner. The evaluation results are shown in Table 4.

<Reference Example 3>

An active energy radiation-curable resin composition was prepared and evaluated in substantially the same manner as in Example 16, except that the proportion of the urethane (meth)acrylate compound (A-2) was 100 parts, and the urethane (meth)acrylate compound (B) and the polysiloxane structure-containing compound (C) were not blended. The evaluation results are shown in Table 4.

<Surface hardness>

The active energy radiation-curable resin compositions prepared in the aforementioned manner were each applied onto a 125-μm thick easily-adhesive PET film (A4300 available from Toyobo Co., Ltd.) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.

The pencil hardness of the cured coating film thus obtained was measured in conformity with JIS K5600-5-4.

Table 4 <(A) + (B) + (C)>

| | Example 16 | Example 17 | Example 18 | Example 19 | Example 20 | Reference Example 3 |
|---|---|---|---|---|---|---|
| Active energy radiation-curable resin composition | | | | | | |
| Urethane (meth)acrylate compound (A) | A-2 (70) | A-2 (70) | A-2 (70) | A-2 (70) | A-2 (70) | A-2 (100) |
| Urethane (meth)acrylate compound (B) | B-1 (30) | B-1 (30) | B-1 (30) | B-1 (30) | B-1 (30) | - |
| Polysiloxane structure-containing Compound (C) | C-1 (0.5) | C-1 (3) | C-1 (10) | C-2 (0.5) | C-2 (3) | - |
| Evaluation | | | | | | |
| Resilience | ○ | ○ | Δ | ○ | ○ | ○ |
| Blocking resistance | ○ | ○ | ○○ | ○ | ○ | Δ |
| Transparency (haze) (%) | ○ [0.36] | ○ [0.38] | ○ [0.31] | ○ [0.46] | Δ [1.38] | ○ [0.34] |
| Surface hardness | F | F | F | F | F | HB |
| (Note) Parenthesized numerals each indicate proportion (parts) of blended compound. | | | | | | |

The evaluation results indicate that the cured coating films formed from the active energy radiation-curable resin compositions of Examples 16 to 20 are excellent in resilience, particularly excellent in blocking resistance, and

further excellent in transparency and surface hardness. The coating films of Examples 16 to 20 are more excellent in blocking resistance and surface hardness than the cured coating film formed from the active energy radiation-curable resin composition of Reference Example 3 containing neither the other urethane (meth)acrylate compound (B) nor the polysiloxane structure-containing compound (C).

[4] System employing urethane (meth)acrylate compound (A) and phosphate group-containing ethylenically unsaturated compound (D) in combination

[4-1] Urethane (meth)acrylate (A) + Phosphate group-containing ethylenically unsaturated compound (D)

<Examples 21 to 26 and Reference Example 4>

Active energy radiation-curable resin compositions were prepared by blending the above urethane (meth)acrylate compound (A-2) and the following phosphate group-containing ethylenically unsaturated compounds (D-1) to (D-3) in proportions shown in Table 5 with 4 parts of a photopolymerization initiator (IRGACURE 184 available from BASF GmbH) and adding methyl isobutyl ketone to a solid concentration of 40 %.

The active energy radiation-curable resin compositions thus prepared were each evaluated for resilience, metal base adhesiveness and transparency (haze) in the following manner. The evaluation results are shown in Table 5.

The following compounds were prepared as the phosphate group-containing ethylenically unsaturated compound (D).

<Phosphate group-containing ethylenically unsaturated compound (D-1)>

2-Methacryloyloxyethyl acid phosphate (LIGHT ESTER P-1M (trade name) available from Kyoeisha Chemical Co., Ltd.)

<Phosphate group-containing ethylenically unsaturated compound (D-2)>

Bis(2-methacryloyloxyethyl) acid phosphate (LIGHT ESTER P-2M (trade name) available from Kyoeisha Chemical Co., Ltd.)

<Phosphate group-containing ethylenically unsaturated compound (D-3)>

Triacryloyloxyethyl phosphate (BISCOAT #3PA (trade name) available from Osaka Organic Chemical Industry Co., Ltd.)

<Resilience>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.

The cured coating film thus obtained was scratched with a two-row brass brush at 23°C at 50 %Rh by moving the brush back and forth five times on the coating film, and time required for making the scratches invisible was measured. The coating film was evaluated based on the following criteria. The results are shown below in Table 5.

(Evaluation criteria)

○: The scratches became invisible in one minute.
Δ: The scratches became invisible in one to ten minutes.
x: The scratches were visible even after a lapse of 10 minutes.

<Metal base adhesiveness>

The active energy radiation-curable resin compositions prepared in the above examples were each applied onto an aluminum base (A1050P available from Nippon Test Panel Co., Ltd. and having a size of 1.0 × 70 × 150 mm) to a thickness corresponding to a cured coating film thickness of 10 μm by means of a bar coater, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.
The cured coating film thus obtained was evaluated for metal base adhesiveness based on the following criteria by a cross-cut tape test method in conformity with JIS K5400-1990.

(Evaluation criteria)

○: Not less than 50 % of the coating film remained on the base after the tape test (not less than 50/100).
×: Less than 50 % of the coating film remained on the base after the tape test (less than 50/100).

<Transparency>

The active energy radiation-curable resin compositions prepared in the aforementioned manner were each applied onto a 125-μm thick easily-adhesive PET film (A4300 available from Toyobo Co., Ltd.) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.
The haze value of a combination of the PET film and the cured coating film thus obtained was measured by means of a haze meter (NDH 2000 available from Nippon Denshoku Industries Co. , Ltd.) The PET film per se had a haze value of 0.52 %.
The evaluation criteria are as follows:

(Evaluation criteria)

o: Haze value was less than 1.0 %.
Δ : Haze value was not less than 1.0 % and less than 3.0 %.
x: Haze value was not less than 3.0 %.

Table 5 < (A) + (D) >

| | Example 21 | Example 22 | Example 23 | Example 24 | Example 25 | Example 26 | Reference Example 4 |
|---|---|---|---|---|---|---|---|
| Active energy radiation-curable resin composition | | | | | | | |
| Urethane (meth)acrylate compound (A) | A-2 (100) | A-2 (100) | A-2 (100) | A-2 (100) | A-2 (100) | A-2 (100) | A-2 (100) |
| Phosphate group-containing Ethylenically unsaturated compound (D) | D-1 (1) | D-1 (2) | D-2 (1) | D-2 (2) | D-3 (1) | D-3 (2) | - |
| Evaluation | | | | | | | |
| Resilience | ○ | ○ | ○ | ○ | ○ | ○ | ○ |

(continued)

| | Example 21 | Example 22 | Example 23 | Example 24 | Example 25 | Example 26 | Reference Example 4 |
|---|---|---|---|---|---|---|---|
| Metal base adhesiveness | ○ [85/100] | ○ [90/100] | ○ [90/100] | ○ [95/100] | ○ [60/100] | ○ [80/100] | × [0/100] |
| Transparency (haze) (%) | ○ [0.47] | ○ [0.45] | ○ [0.48] | ○ [0.61] | ○ [0.47] | ○ [0.58] | ○ [0.34] |
| (Note) Parenthesized numerals each indicate proportion (parts) of blended compound. | | | | | | | |

The evaluation results indicate that the cured coating films formed from the active energy radiation-curable resin compositions of Examples 21 to 26 each employing the urethane (meth)acrylate compound (A) and the phosphate group-containing ethylenically unsaturated compound (D) in combination are excellent in resilience, metal base adhesiveness and transparency. The coating films of Examples 21 to 26 are more excellent in metal base adhesiveness than the coating film formed from the active energy radiation-curable resin composition of Reference Example 4 not containing the phosphate group-containing ethylenically unsaturated compound (D).

[4-2] Urethane (meth)acrylate compound (A) + Other urethane (meth)acrylate compound (B) + Phosphate group-containing ethylenically unsaturated compound (D)

<Examples 27 to 32>

Active energy radiation-curable resin compositions were prepared by blending the above urethane (meth)acrylate compound (A-2), the above urethane (meth)acrylate compound (B-1) and the above phosphate group-containing ethylenically unsaturated compound (D-1) to (D-3) in proportions shown in Table 6 with 4 parts of a photopolymerization initiator (IRGACURE 184 available from BASF GmbH) and adding methyl isobutyl ketone to a solid concentration of 40 %.

The active energy radiation-curable resin compositions thus prepared were each evaluated for resilience, blocking resistance, metal base adhesiveness and surface hardness in the following manner. The evaluation results are shown in Table 6.

<Reference Example 5>

An active energy radiation-curable resin composition was prepared and evaluated in substantially the same manner as in Example 27, except that the proportion of the urethane (meth)acrylate compound (A-2) was 100 parts and the urethane (meth)acrylate compound (B) and the phosphate group-containing ethylenically unsaturated compound (D) were not blended. The evaluation results are shown in Table 6.

<Resilience>

The active energy radiation-curable resin compositions prepared in the aforementioned manner were each applied onto a black polycarbonate base (available from Nippon Test Panel Co., Ltd. and having a size of 2 x 70 x 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.

The cured coating film thus obtained was scratched with a two-row brass brush at 23°C at 50 %Rh by moving the brush back and forth five times on the coating film, and time required for making the scratches invisible was measured. The coating film was evaluated based on the following criteria.

(Evaluation criteria)

○: The scratches became invisible in one minute.

Δ : The scratches became invisible in one to ten minutes.

x: The scratches were visible even after a lapse of 10 minutes.

<Blocking resistance>

The active energy radiation-curable resin compositions prepared in the aforementioned manner were each applied onto a black polycarbonate base (available from Nippon Test Panel Co., Ltd. and having a size of 2 × 70 × 150 mm) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.

A PET film was placed on a front surface of the cured coating film obtained in the aforementioned manner, and then combined with the cured coating film by moving a roller back and force once on the PET film with a load of 2 kg at 23°C at 50 %Rh. After a lapse of 5 minutes, the PET film was peeled off, whereby the adhesiveness of the front surface of the cured coating film was measured. The cured coating film was evaluated based on the following evaluation criteria.

(Evaluation criteria)

oo: The PET film did not adhere to the cured coating film at all.
○: The PET film slightly adhered to the cured coating film, but no adhesion trace was left.
Δ: The PET film adhered to the cured coating film, but no adhesion trace was left.
×: The PET film adhered to the cured coating film, and an adhesion trace was left.

<Metal base adhesiveness>

The active energy radiation-curable resin compositions prepared in the aforementioned manner were each applied onto an aluminum base (A1050P available from Nippon Test Panel Co., Ltd. and having a size of 1.0 x 70 × 150 mm) to a thickness corresponding to a cured coating film thickness of 10 μm by means of a bar coater, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.

The cured coating film thus obtained was evaluated for metal base adhesiveness by a cross-cut tape test method in conformity with JIS K5400-1990.

(Evaluation criteria)

○: Not less than 50 % of the coating film remained on the base after the tape test (not less than 50/100).
×: Less than 50 % of the coating film remained on the base after the tape test (less than 50/100).

<Surface hardness>

The active energy radiation-curable resin compositions prepared in the aforementioned manner were each applied onto a 125-μm thick easily-adhesive PET film (A4300 available from Toyobo Co., Ltd.) to a thickness corresponding to a cured coating film thickness of 40 μm by means of an applicator, and then the resulting coating film was dried at 90°C for 5 minutes. Thereafter, the resulting coating film was irradiated with ultraviolet radiation emitted from a height of 18 cm by means of a single 80-W high pressure mercury lamp (at a cumulative dose of 800 $mJ/cm^2$) twice while being transported at a conveyor speed of 3.4 m/min. Thus, a cured coating film was obtained.

The pencil hardness of the cured coating film thus obtained was measured in conformity with JIS K5600-5-4.

Table 6 <(A) + (B) + (D)>

| | Example 27 | Example 28 | Example 29 | Example 30 | Example 31 | Example 32 | Reference Example 5 |
|---|---|---|---|---|---|---|---|
| Active energy radiation-curable resin composition | | | | | | | |

(continued)

| | Example 27 | Example 28 | Example 29 | Example 30 | Example 31 | Example 32 | Reference Example 5 |
|---|---|---|---|---|---|---|---|
| Urethane (meth)acrylate compound (A) | A-2 (70) | A-2 (70) | A-2 (70) | A-2 (70) | A-2 (70) | A-2 (70) | A-2 (100) |
| Urethane (meth)acrylate compound (B) | B-1 (30) | B-1 (30) | B-1 (30) | B-1 (30) | B-1 (30) | B-1 (30) | - |
| Phospnate group-containing Ethylenically unsaturated comoound (D) | D-1 (1) | D-1 (2) | D-2 (1) | D-2 (2) | D-3 (1) | D-3 (2) | - |
| Evaluation | | | | | | | |
| Resilience | ○ | ○ | ○ | ○ | ○ | ○ | ○ |
| Blocking resistance | Δ | Δ | Δ | Δ | Δ | Δ | Δ |
| Metal base adhesiveness | ○ [90/100] | ○ [90/100] | ○ [98/100] | ○ [98/100] | ○ [95/100] | ○ [98/100] | ○ [0/100] |
| Surface hardness | F | F | F | F | F | F | HB |
| (Note) Parenthesized numerals each indicate proportion (parts) of blended compound. | | | | | | | |

The evaluation results indicate that the cured coating films formed from the active energy radiation-curable resin compositions of Examples 27 to 32 are excellent in resilience and blocking resistance, and further excellent in metal base adhesiveness and surface hardness. The coating films of Examples 27 to 32 are more excellent in metal base adhesiveness and surface hardness than the cured coating film formed from the active energy radiation-curable resin composition of Reference Example 5 containing neither the other urethane (meth) acrylate compound (B) nor the phosphate group-containing ethylenically unsaturated compound (D).

[4-3] Urethane (meth)acrylate compound (A) + Polysiloxane structure-containing compound (C) + Phosphate group-containing ethylenically unsaturated compound (D)

<Example 33 and Reference Example 6>

Active energy radiation-curable resin compositions were prepared by blending the above urethane (meth)acrylate compound (A-2), the above polysiloxane structure-containing compound (C-2) and the above phosphate group-containing ethylenically unsaturated compound (D-2) in proportions shown in Table 7 with 4 parts of a photopolymerization initiator (IRGACURE 184 available from BASF GmbH) and adding methyl isobutyl ketone to a solid concentration of 40 %.

The active energy radiation-curable resin compositions thus prepared were each evaluated for resilience, blocking resistance, transparency (haze) and metal base adhesiveness in the aforementioned manner. The evaluation results are shown in Table 7.

Table 7 <(A) + (C) + (D) >

| | Example 33 | Reference Example 6 |
|---|---|---|
| Active energy radiation-curable resin composition | | |
| Urethane (meth)acrylate compound (A) | A-2 (100) | A-2 (100) |
| Polysiloxane structure-containing compound (C) | C-2 (3) | - |
| Phosphate group-containing ethylenically unsaturated compound (D) | D-2 (2) | - |
| Evaluation | | |

(continued)

| | Example 33 | Reference Example 6 |
|---|---|---|
| Resilience | ○ | ○ |
| Blocking resistance | ○ | Δ |
| Transparency (haze) (%) | ○ [0.53] | ○ [0.34] |
| Metal base adhesiveness | ○ [100/100] | × [0/100] |
| (Note) Parenthesized numerals each indicate proportion (parts) of blended compound. | | |

The evaluation results indicate that the cured coating film formed from the active energy radiation-curable resin composition of Example 33 containing the urethane (meth)acrylate compound (A), the polysiloxane structure-containing compound (C) and the phosphate group-containing ethylenically unsaturated compound (D) is excellent in resilience, blocking resistance and transparency, and further excellent in metal base adhesiveness. The coating film of Example 33 is more excellent in blocking resistance and metal base adhesiveness than the cured coating film formed from the active energy radiation-curable resin composition of Reference Example 6 containing neither the polysiloxane structure-containing compound (C) nor the phosphate group-containing ethylenically unsaturated compound (D).

[4-4] Urethane (meth)acrylate compound (A) + Other urethane (meth)acrylate compound (B) + Polysiloxane structure-containing compound (C) + Phosphate group-containing ethylenically unsaturated compound (D)

<Example 34>

An active energy radiation-curable resin composition was prepared by blending the above urethane (meth)acrylate compound (A-2), the above urethane (meth)acrylate compound (B-1), the above polysiloxane structure-containing compound (C-1) and the above phosphate group-containing ethylenically unsaturated compound (D-2) in proportions shown in Table 8 with 4 parts of a photopolymerization initiator (IRGACURE 184 available from BASF GmbH) and adding methyl isobutyl ketone to a solid concentration of 40 %.

The active energy radiation-curable resin composition thus prepared was evaluated for resilience, blocking resistance, transparency (haze), metal base adhesiveness and surface hardness in the aforementioned manner. The evaluation results are shown in Table 8.

Table 8 < (A) + (B) + (C) + (D) >

| | Example 34 |
|---|---|
| Active energy radiation-curable resin composition | |
| Urethane (meth)acrylate compound (A) | A-2 (70) |
| Urethane (meth)acrylate compound (B) | B-1 (30) |
| Polysiloxane structure-containing compound (C) | C-1 (3) |
| Phosphate group-containing ethylenically unsaturated compound (D) | D-2 (2) |
| Evaluation | |
| Resilience | ○ |
| Blocking resistance | ○ |
| Transparency (haze) (%) | ○ [0.34] |
| Metal base adhesiveness | ○ [100/100] |
| Surface hardness | F |
| (Note) Parenthesized numerals each indicate proportion (parts) of blended compound. | |

The evaluation results indicate that the cured coating film formed from the active energy radiation-curable resin composition of Example 34 is excellent in resilience, blocking resistance and transparency, and further excellent in metal base adhesiveness and surface hardness.

While specific forms of the present invention have been shown in the aforementioned inventive examples, the inventive examples are merely illustrative of the invention but not limitative of the invention. It is contemplated that various modifications apparent to those skilled in the art could be made within the scope of the invention.

The urethane (meth)acrylate compound of the embodiments of the present invention is useful for a paint, an ink, a coating agent and the like, because the cured coating film formed from the active energy radiation-curable resin composition containing the urethane (meth)acrylate compound of the embodiments of the present invention is excellent in scratch resilience and blocking resistance with good balance. Particularly, the active energy radiation-curable resin composition is useful as an outermost surface coating agent, a metal surface coating agent and an inkjet ink.

## Claims

1. A urethane (meth)acrylate compound (A) comprising a reaction product of a hydroxyl group-containing (meth)acrylate compound (x) having a structural moiety derived from ε-caprolactone and a polyvalent isocyanate compound (y), wherein the polyvalent isocyanate compound (y) has an average isocyanate group number of not less than 3.2.

2. The urethane (meth)acrylate compound according to claim 1, wherein the hydroxyl group-containing (meth)acrylate compound (x) is a hydroxyl group-containing (meth)acrylate compound containing an ethylenically unsaturated group.

3. The urethane (meth)acrylate compound according to claim 1 or 2, wherein the polyvalent isocyanate compound (y) is an acyclic aliphatic diisocyanate.

4. The urethane (meth)acrylate compound according to any of claims 1 to 3, wherein the polyvalent isocyanate compound (y) has a number average molecular weight of 500 to 5,000.

5. The urethane (meth)acrylate compound (A) according to any of claims 1 to 4, which has an ethylenically unsaturated group content of 0.1 to 10 mmol/g.

6. The urethane (meth)acrylate compound (A) according to any of claims 1 to 5, which has a weight average molecular weight of 1,000 to 50,000.

7. An active energy radiation-curable resin composition comprising the urethane (meth)acrylate compound (A) according to any of claims 1 to 6.

8. The active energy radiation-curable resin composition according to claim 7, further comprising a urethane (meth)acrylate compound (B) different from the urethane (meth)acrylate compound (A).

9. The active energy radiation-curable resin composition according to claim 8, wherein the urethane (meth) acrylate compound (B) is at least one of a urethane (meth) acrylate compound (B1) prepared by a reaction of a hydroxyl group-containing (meth)acrylate compound (b1), a polyvalent isocyanate compound (b2) and a polyol compound (b3), and a urethane (meth)acrylate compound (B2) prepared by a reaction of the hydroxyl group-containing (meth)acrylate compound (b1) and the polyvalent isocyanate compound (b2).

10. The active energy radiation-curable resin composition according to claim 8 or 9, wherein the urethane (meth)acrylate compound (B) is present in a proportion of not greater than 100 parts by weight based on 100 parts by weight of the urethane (meth)acrylate compound (A).

11. The active energy radiation-curable resin composition according to any of claims 7 to 10, further comprising a polysiloxane structure-containing compound (C).

12. The active energy radiation-curable resin composition according to claim 11, wherein the polysiloxane structure-containing compound (C) is a polysiloxane structure-containing urethane (meth)acrylate compound (C1).

13. The active energy radiation-curable resin composition according to claim 11 or 12, wherein the polysiloxane structure-containing compound (C) is present in a proportion of 0.01 to 100 parts by weight based on 100 parts by weight of the urethane (meth)acrylate compound (A).

**14.** The active energy radiation-curable resin composition according to any of claims 7 to 13, further comprising a phosphate group-containing ethylenically unsaturated compound (D).

**15.** The active energy radiation-curable resin composition according to claim 14, wherein the phosphate group-containing ethylenically unsaturated compound (D) is present in a proportion of 0.01 to 10 parts by weight based on 100 parts by weight of the urethane (meth)acrylate compound (A).

**16.** A coating agent comprising the active energy radiation-curable resin composition according to any of claims 7 to 15.

**17.** The coating agent according to claim 16, which is used as an outermost surface coating agent.

**18.** The coating agent according to claim 16, which is used as a metal surface coating agent.

**INTERNATIONAL SEARCH REPORT**

International application No.
PCT/JP2015/059837

A. CLASSIFICATION OF SUBJECT MATTER
*C08G18/67*(2006.01)i, *C08F290/06*(2006.01)i, *C08F299/06*(2006.01)i, *C08G18/73*(2006.01)i, *C09D175/14*(2006.01)i

According to International Patent Classification (IPC) or to both national classification and IPC

B. FIELDS SEARCHED

Minimum documentation searched (classification system followed by classification symbols)
C08G18/00-18/87, C08G71/00-71/04, C08F283/01, C08F290/00-290/14, C08F299/00-299/08, C09D1/00-10/00, C09D101/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-045504 A (The Nippon Synthetic Chemical Industry Co., Ltd.), 16 February 2006 (16.02.2006), claims; paragraphs [0014] to [0063], [0081] & WO 2006/006402 A1 | 1-13,16-18<br>14-18 |
| X<br>Y | JP 2001-002744 A (Natoco Co., Ltd.), 09 January 2001 (09.01.2001), claims; paragraphs [0010] to [0035], [0070] (Family: none) | 1-13,16-18<br>14-18 |
| X<br>Y | JP 2004-035599 A (Natoco Co., Ltd.), 05 February 2004 (05.02.2004), claims; paragraphs [0015] to [0050] (Family: none) | 1-13,16-18<br>14-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 June 2015 (23.06.15) | 30 June 2015 (30.06.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/059837

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2012/060390 A1 (Kansai Paint Co., Ltd.), 10 May 2012 (10.05.2012), claims; paragraphs [0027] to [0146] (Family: none) | 1-10,16-18<br>11-15 |
| X<br>Y | WO 2013/135686 A1 (BYK-CHEMIE GMBH), 19 September 2013 (19.09.2013), claims; full description & EP 2825578 A1 | 1-18<br>14-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004035599 A